(19) Europäisches Patentamt
European Patent Office
Office européen des brevets

(11) **EP 3 552 744 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **19164586.0**

(22) Anmeldetag: **22.03.2019**

(51) Internationale Patentklassifikation (IPC):
**B23F 19/10** *(2006.01)* **B23F 23/00** *(2006.01)*

(52) Gemeinsame Patentklassifikation (CPC):
**B23F 19/105; B23F 23/006**

(54) **VORRICHTUNG UND VERFAHREN ZUR ANFASBEARBEITUNG EINES WERKSTÜCKS**

DEVICE AND METHOD FOR FINISHING A WORKPIECE

DISPOSITIF ET PROCÉDÉ DE TRAITEMENT PAR CHANFREINAGE D'UNE PIÈCE À USINER

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **11.04.2018 DE 102018108632**

(43) Veröffentlichungstag der Anmeldung:
**16.10.2019 Patentblatt 2019/42**

(60) Teilanmeldung:
**25151995.5**

(73) Patentinhaber: **Liebherr-Verzahntechnik GmbH**
**87437 Kempten (DE)**

(72) Erfinder:
• **Weixler, Johannes**
**87471 Durach (DE)**
• **Würfel, Robert**
**87499 Wildpoldsried (DE)**
• **Hunt, Alexander**
**87437 Kempten (DE)**
• **van Hauth, Johannes**
**87435 Kempten (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-A1- 3 012 056      EP-A2- 2 700 466
DE-A1- 102009 020 771   DE-A1- 102011 050 498
DE-A1- 102013 003 804   DE-A1- 102013 015 240
DE-C1- 4 134 925      SU-A1- 1 634 404

**Beschreibung**

Die vorliegende Erfindung betrifft eine Vorrichtung zur Anfasbearbeitung eines verzahnten Werkstücks, mit einer Werkstückspindel mit einer um eine Drehachse drehbar gelagerten Werkstückaufnahme zur Aufnahme des Werkstücks, einer Werkzeugspindel mit einer um eine Drehachse drehbar gelagerten Werkzeugaufnahme zur Aufnahme eines Fingerfräsers, wobei die Werkzeugspindel über mindestens eine Linearachse der Vorrichtung relativ zu der Werkstückaufnahme verfahrbar ist, und einer Steuerung mit einer Bearbeitungsfunktion, welche zur Anfasbearbeitung eines verzahnten Werkstücks das in der Werkstückaufnahme aufgenommene Werkstück durch Ansteuerung der Werkstückspindel dreht, während ein in der Werkzeugaufnahme aufgenommener Fingerfräser an der zu bearbeitenden Kante angreift.

Eine solche Vorrichtung ist aus der DE 20 2012 008 601 U1 bekannt. Der dort eingesetzte Fingerfräser weist einen kegelstumpfförmigen Werkzeugkopf auf und wird von oben bzw. von unten an die jeweilige Kante des verzahnten Werkstücks herangefahren, um diese anfaszubearbeiten. Hierzu wird die Werkzeugspindel über die mindestens eine Bewegungsachse der Vorrichtung so bewegt, dass der in der Werkzeugaufnahme aufgenommene Fingerfräser gesteuert entlang der Kontur der zu bearbeitenden Kante des Werkstücks geführt wird, während das Werkstück um seine Drehachse gedreht wird. Die Vorrichtung zur Anfasbearbeitung ist an dem Gegenständer einer Werkzeugmaschine, auf welcher die Verzahnung hergestellt wird, angeordnet, und erlaubt hierdurch eine Anfasbearbeitung des Werkstücks in der gleichen Aufspannung, in welcher auch die Verzahnung erzeugt wurde. Die aus der DE 20 2012 008 601 U1 bekannte Vorrichtung zur Anfasbearbeitung kann jedoch nur bei gut zugänglichen Kanten einer Verzahnung eingesetzt werden. Weiterhin ist die Geschwindigkeit, mit welcher die Anfasbearbeitung durchgeführt werden kann, begrenzt, und der Fingerfräser einem hohen Verschleiß ausgesetzt.

Die DE 10 2009 020 771 A1 beschreibt ebenfalls das Anfasen eines Werkstücks über einen Fingerfräser. Hier wird allerdings ein 6-Achs-Industrieroboter eingesetzt, um die Werkzeugspindel zu verfahren.

Druckschrift EP 3 012 056 A1 zeigt eine Vorrichtung gemäß dem Oberbegriff von Anspruch 1.

Druckschrift DE 10 2013 003 804 A1 zeigt eine Vorrichtung zur Anfasbearbeitung mittels einer Schleifscheibe, deren Schleiffläche gekrümmt ist, wobei die Krümmungsradien kleiner sind als eine halbe Teilung des Werkstücks. Dabei wird die Rotationsgeschwindigkeit des Werkstücks zur Erzielung einer gleichmäßigen Vorschubgeschwindigkeit dem Verlauf der Stirnkante entsprechend angepasst.

Druckschriften DE 10 2011 050 498 A1 und DE 41 34 925 C1 zeigen Vorrichtungen zur Abdachbearbeitung von Verzahnungen.

Weiterhin ist unter der Bezeichnung "Gratomat" eine Vorrichtung zur Anfasbearbeitung bekannt, bei welcher ein Fingerfräser mit einer zylindrischen Mantelfläche eingesetzt wird, welcher unter Vorspannung auf der Zahnkante aufliegt und daher bei einer Drehbewegung des Werkstücks der Kontur der Kante folgt. Die Werkzeugspindel ist hierzu schwenkbar gelagert und über eine Feder gegen die Kante vorgespannt. Bei dem Gratomat-Verfahren ergeben sich jedoch starke Schwankungen der Fasengröße und Fasenform vom Zahnkopf zum Zahnfuß. Weiterhin ist die Geschwindigkeit des Verfahrens gering, und der Fingerfräser einem hohen Verschleiß ausgesetzt.

Aufgabe der vorliegenden Erfindung ist es daher, eine verbesserte Vorrichtung zur Anfasbearbeitung zur Verfügung zu stellen.

Diese Aufgabe wird von dem unabhängigen Vorrichtungsanspruch der vorliegenden Anmeldung gelöst. Bevorzugte Ausgestaltungen der vorliegenden Erfindung sind Gegenstand der Unteransprüche.

Die vorliegende Erfindung umfasst eine Vorrichtung zur Anfasbearbeitung eines verzahnten Werkstücks, mit einer Werkstückspindel mit einer um eine Drehachse drehbar gelagerten Werkstückaufnahme zur Aufnahme des Werkstücks, einer Werkzeugspindel mit einer um eine Drehachse drehbar gelagerten Werkzeugaufnahme zur Aufnahme eines Fingerfräsers, wobei die Werkzeugspindel über mindestens eine Linearachse der Vorrichtung relativ zu der Werkstückaufnahme verfahrbar ist, und einer Steuerung mit einer Bearbeitungsfunktion, welche zur Anfasbearbeitung eines verzahnten Werkstücks das in der Werkstückaufnahme aufgenommene Werkstück durch Ansteuerung der Werkstückspindel dreht, während ein in der Werkzeugaufnahme aufgenommener Fingerfräser an der zu bearbeitenden Kante angreift. Erfindungsgemäß ist vorgesehen, dass die Bearbeitungsfunktion die Drehgeschwindigkeit des Werkstücks während der Anfasbearbeitung variiert.

Während gemäß dem Stand der Technik mit einer konstanten Drehzahl des Werkstücks gearbeitet wurde, variiert diese gemäß dem ersten Aspekt der vorliegenden Erfindung, während der Fingerfräser die Kante bearbeitet. Die Erfinder der vorliegenden Erfindung haben erkannt, dass bei einer konstanten Drehzahl durch die Kontur der Kante die Relativgeschwindigkeit zwischen der Kante und dem Fingerfräser entweder stark schwankt, was einen negativen Einfluss auf die Bearbeitungsgeschwindigkeit und das Bearbeitungsergebnis sowie die Standzeit des Fingerfräser hat, oder dass die Kontur überhaupt nicht bearbeitet werden kann. Durch die Variation der Drehzahl bzw. Drehgeschwindigkeit können diese Probleme behoben werden.

Bevorzugt ist vorgesehen, dass die Bearbeitungsfunktion die Drehgeschwindigkeit über eine Zahnlücke variiert, d. h. die Bearbeitung unterschiedlicher Bereiche einer Zahnlücke mit unterschiedlicher Drehgeschwindigkeit des Werkstücks erfolgt.

Als Zahnlücke wird bevorzugt ein Bereich verstanden, welcher durch zwei sich gegenüberliegende Zahnflanken, den dazwischenliegenden Zahnfuß und jeweils die Hälfte der angrenzenden Zahnköpfe gebildet wird. Als Zahnflanken werden die aktiven, zum Abrollen auf einer anderen Verzahnung ausgelegten Bereiche der Verzahnung verstanden. Bei einer evolventischen Verzahnung entsprechen die Zahnflanken den evolventischen Bereichen der Verzahnung.

Bevorzugt schwankt die Drehgeschwindigkeit des Werkstücks über die Zahnlücke um mehr als 30% des Maximalwertes, weiter bevorzugt um mehr als 60% des Maximalwertes.

In einer möglichen Ausgestaltung der vorliegenden Erfindung setzt die Bearbeitungsfunktion für jede Zahnlücke das gleiche Geschwindigkeitsprofil der Drehgeschwindigkeit ein. Die Variation in der Geschwindigkeit wiederholt sich daher für jede Zahnlücke der zu bearbeitenden Zahnkante.

In einer möglichen Ausgestaltung der vorliegenden Erfindung variiert die Bearbeitungsfunktion die Drehgeschwindigkeit über eine Zahnlücke so, dass das Schnittvolumen des Fingerfräsers pro Zeiteinheit und/oder die Relativgeschwindigkeit zwischen der Kante und dem Fingerfräser über die Zahnlücke um nicht mehr als 30 % des Maximalwertes schwankt, bevorzugt um nicht mehr als 15 % des Maximalwertes.

In einer möglichen Ausgestaltung der vorliegenden Erfindung variiert die Bearbeitungsfunktion die Drehgeschwindigkeit des Werkstücks über mindestens eine Zahnflanke, d.h. in unterschiedlichen Bereichen einer Zahnflanke wird mit unterschiedlichen Drehgeschwindigkeiten gearbeitet.

In einer ersten Variante der vorliegenden Erfindung variiert die Bearbeitungsfunktion die Drehgeschwindigkeit des Werkstücks über eine Zahnlücke so, dass eine linke Zahnflanke mit einer anderen Drehgeschwindigkeit und/oder Drehbeschleunigung als eine rechte Zahnflanke bearbeitet wird. Insbesondere kann die durchschnittliche, die minimale und/oder die maximale Drehgeschwindigkeit und/oder Drehbeschleunigung für eine Zahnflanke größer sein als für die andere Zahnflanke.

Bevorzugt unterscheiden sich die Drehgeschwindigkeit des Werkstücks auf linker und rechter Flanke um mehr als 10% des größeren Wertes, weiter bevorzugt um mehr als 30% des größeren Wertes.

In einer zweiten Variante der vorliegenden Erfindung variiert die Bearbeitungsfunktion die Drehgeschwindigkeit über eine Zahnlücke so, dass eine linke Zahnflanke mit einem Drehgeschwindigkeitsprofil bearbeitet wird, welches nicht symmetrisch zu dem auf der rechten Zahnflanke eingesetzten Drehgeschwindigkeitsprofil ist. Dies trägt insbesondere den besonderen Anforderungen beim Anfasen von Schrägverzahnungen Rechnung. Ein solches für linke und rechte Flanke unterschiedliches Drehgeschwindigkeitsprofil kann aber auch bei Geradverzahnungen eingesetzt werden. Die Verzahnung selbst kann auf linker und rechter Flanke symmetrisch oder asymmetrisch ausgeführt sein.

In einer möglichen Ausgestaltung der vorliegenden Erfindung variiert die Bearbeitungsfunktion die Drehgeschwindigkeit über eine Zahnlücke so, dass im Bereich des Zahnfußes mit einer größeren Drehbeschleunigung des Werkstückes gearbeitet wird als an mindestens einer und bevorzugt an beiden Zahnflanken. Insbesondere kann die durchschnittliche, die minimale und/oder die maximale Drehbeschleunigung im Bereich des Zahnfußes größer sein als an mindestens einer und bevorzugt an beiden Zahnflanken. Der Bereich des Zahnfußes kann insbesondere dazu genutzt werden, um von einer ersten Drehgeschwindigkeit, welche bei der Anfasbearbeitung des fußseitigen Endes der einen Flanke zum Einsatz kommt, zu einer anderen Drehgeschwindigkeit, welche bei der Anfasbearbeitung des fußseitigen Endes der anderen Flanke zum Einsatz kommt, zu beschleunigen.

In einer möglichen Ausgestaltung der vorliegenden Erfindung variiert die Bearbeitungsfunktion die Drehgeschwindigkeit über eine Zahnlücke so, dass im Bereich des Zahnkopfes mit einer größeren Drehgeschwindigkeit und/oder Drehbeschleunigung des Werkstückes gearbeitet wird als an mindestens einer und bevorzugt an beiden Zahnflanken und/oder im Bereich des Zahnfußes. Insbesondere kann die durchschnittliche, die minimale und/oder die maximale Drehgeschwindigkeit und/oder Drehbeschleunigung im Bereich des Zahnkopfes größer sein als an mindestens einer und bevorzugt an beiden Zahnflanken und/oder im Bereich des Zahnfußes.

Bei der Drehbeschleunigung im Sinne der vorliegenden Erfindung kann es sich auch um eine negative Beschleunigung handeln, wobei die obigen Angaben sich bevorzugt auf den jeweiligen Absolutwert der Beschleunigung beziehen.

Erfindungsgemäß kann die Bearbeitungsfunktion einen oder mehrere Bearbeitungsmodi umfassen, welche eine oder mehrere der oben genannte Möglichkeiten der Variation einzeln oder in Kombination verwirklichen.

In vielen Anwendungen der vorliegenden Erfindung wird über die gesamte Zahnlücke und damit die gesamte Zahnkante mit der gleichen Drehrichtung des Werkstücks gearbeitet. Weiterhin wird die Drehgeschwindigkeit in vielen Fällen nicht auf Null sinken.

In einer möglichen Ausgestaltung der vorliegenden Erfindung umfasst die Bearbeitungsfunktion daher einen Bearbeitungsmodus, bei welcher über die gesamte Zahnlücke und damit die gesamte Zahnkante mit der gleichen Drehrichtung des Werkstücks gearbeitet wird und/oder die Drehgeschwindigkeit nicht auf Null sinkt.

In einigen Anwendungen der vorliegenden Erfindung ändert die Bearbeitungsfunktion die Drehrichtung des Werkstücks dagegen beim Durchfahren einer Zahnlücke. Die Erfinder der vorliegenden Erfindung haben erkannt, dass dies für die Bearbeitung einiger Geometrien notwendig ist.

In einer möglichen Ausgestaltung der vorliegenden Erfindung umfasst die Bearbeitungsfunktion daher einen Bearbeitungsmodus, in welche sich die Drehrichtung des Werkstücks beim Durchfahren einer Zahnlücke ändert.

Weiterhin kann die Bearbeitungsfunktion einen Bearbeitungsmodus aufweisen, in welchem die Drehgeschwindigkeit beim Durchfahren einer Zahnlücke auf Null sinkt.

In einer möglichen Ausgestaltung kann diese im Rahmen des Wechsels in der Drehrichtung erfolgen.

In einer möglichen Ausgestaltung verbleibt die Drehgeschwindigkeit für eine gewisse Zeitspanne bei Null. Dies kann auch ohne eine darauffolgende Änderung der Drehrichtung des Werkstücks von Vorteil sein, um eine Relativbewegung des Fingerfräser zum Werkstück bei stehendem Werkstück zu ermöglichen.

Erfindungsgemäß kann die Bearbeitungsfunktion einen oder mehrere der oben genannten Bearbeitungsmodi umfassen. Sind mehrere Bearbeitungsmodi vorgesehen, weist die Bearbeitungsfunktion bevorzugt eine Auswahlfunktion auf, insbesondere als Bestandteil der Bedienerführung.

In einer möglichen Ausgestaltung der vorliegenden Erfindung ist die Werkzeugspindel über mindestens eine Bewegungsachse der Vorrichtung relativ zu der Werkstückaufnahme verfahrbar, insbesondere über mindestens eine und bevorzugt mehrere Linearachsen.

Die vorliegende Erfindung kann in einer ersten Variante bei einer Vorrichtung zum Einsatz kommen, bei welcher der Fingerfräser unter Vorspannung auf der Zahnkante aufliegt und daher bei einer Drehbewegung des Werkstücks der Kontur der Kante folgt, insbesondere ohne dass eine durch Antriebe der Vorrichtung gesteuerte Bewegung der Werkzeugspindel relativ zur Werkstückspindel erfolgen würde. Die Werkzeugspindel ist hierzu bevorzugt schwenkbar gelagert und über eine Feder gegen die Kante vorgespannt, insbesondere so, wie dies vom Gratomat-Verfahren bekannt ist. Auch hier ergibt sich durch die Variation der Drehgeschwindigkeit des Werkstücks ein erheblicher Vorteil. Die eine oder mehreren Linearachsen können zum initialen Heranfahren des Fingerfräsers an die Verzahnung eingesetzt werden.

In einer bevorzugten zweiten Variante ist die Werkzeugspindel dagegen über mindestens eine Bewegungsachse der Vorrichtung relativ zu der Werkstückaufnahme verfahrbar, wobei die Bearbeitungsfunktion zur Anfasbearbeitung eines in der Werkstückaufnahme aufgenommenen verzahnten Werkstücks die Werkzeugspindel über die mindestens eine Bewegungsachse relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird. Diese gesteuerte Bewegung der Werkzeugspindel erfolgt bevorzugt synchronisiert zur Werkstückdrehung.

Insbesondere können in einem Speicher der Steuerung Steuerbefehle und/oder eine vorbestimmte Kontur abgelegt sein, auf deren Grundlage eine entsprechende Ansteuerung der Bewegungsachsen der Vorrichtung, insbesondere über eine Ansteuerung der Werkstückspindel und der mindestens einen Bewegungsachse, mit welcher die Werkzeugspindel relativ zur Werkstückspindel bewegt werden kann, so erfolgt, dass der Fingerfräser die vorbestimmte Kontur abfährt.

Durch die gesteuerte, zur Drehbewegung des Werkstücks synchronisierte Führung des Fingerfräsers können erheblich höhere Schnittgeschwindigkeiten erreicht werden als beim Gratomat-Verfahren.

Gegenüber dem aus der DE 20 2012 008 601 U1 bekannten Vorgehen, welches bereits eine gesteuerte Führung des Fingerfräsers vorsieht, ergibt sich durch die Variation der Drehzahl des Werkstücks ebenfalls die Möglichkeit, mit einer gleichmäßigeren und damit insgesamt höheren Schnittgeschwindigkeit zu arbeiten.

Durch die Variation der Drehzahl des Werkstücks wird zudem die Belastung und der Verschleiß des Fingerfräsers reduziert.

In einer möglichen Ausgestaltung der vorliegenden Erfindung ist die Werkzeugspindel über eine erste Linearachse X in einer Richtung senkrecht zur Drehachse der Werkstückaufnahme und/oder über eine zweite Linearachse Z parallel zur Drehachse der Werkstückaufnahme verfahrbar.

Gemäß der ersten Variante des ersten Aspekts können diese Achsen zur initialen Positionierung des Fingerfräsers zur Kante eingesetzt werden, während der Bearbeitung einer Kante jedoch nicht mehr verfahren werden.

Bevorzugt ist jedoch vorgesehen, dass die Bearbeitungsfunktion die Werkzeugspindel über die erste Linearachse X und/oder die zweite Linearachse Z so ansteuert, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird.

In einer möglichen Ausgestaltung der vorliegenden Erfindung erfolgt die Ansteuerung so, dass der Fingerfräser zumindest über einen Teilbereich der Zahnlücke durch eine Überlagerung einer Bewegung der ersten Linearachse X und der zweiten Linearachse Z gesteuert entlang der Kontur geführt wird.

Alternativ oder zusätzlich kann die Ansteuerung so erfolgen, dass der Fingerfräser beim Durchfahren einer Zahnlücke sowohl durch eine Bewegung der ersten Linearachse X als auch der zweiten Linearachse Z gesteuert entlang der Kontur geführt wird. Die Verfahrbewegungen durch die erste Linearachse X und die zweite Linearachse Z müssen jedoch nicht kleinzeitig erfolgen.

Die Relativbewegung zwischen der Werkzeugspindel und der Werkstückspindel während der Anfasbearbeitung einer Kante kann ausschließlich über eine oder beide dieser Achsen erfolgen. Alternativ können zusätzlich zu einer oder beiden dieser Achsen jedoch auch noch andere Bewegungsachsen der Vorrichtung eingesetzt werden, um den in der Werkzeugaufnahme aufgenommenen Fingerfräser gesteuert entlang der Kontur der zu bearbeitenden Kante des Werkstücks zu führen, insbesondere eine oder mehrere Schwenkachsen.

In einer möglichen Ausgestaltung der vorliegenden Erfindung ist die Bearbeitungsfunktion so ausgeführt, dass sie die Werkzeugspindel über die erste Linearachse X und/oder die zweite Linearachse Z so ansteuert, dass unterschiedliche axiale Bereiche der Mantelfläche eines in der Werkzeugaufnahme aufgenommenen Fingerfräsers mit der zu bearbeitenden Kante des Werkstücks in Eingriff kommen. Hierdurch wird der Verschleiß über die Länge des Fingerfräsers verteilt. Bevorzugt erfolgt dies durch eine Verfahrbewegung durch die zweite Linearachse Z.

Insbesondere können während der Bearbeitung einer Zahnkante und insbesondere über eine Zahnlücke unterschiedliche axiale Bereiche der Mantelfläche eines in der Werkzeugaufnahme aufgenommenen Fingerfräsers mit der zu bearbeitenden Kante des Werkstücks in Eingriff kommen.

Alternativ können zur Bearbeitung unterschiedlicher Zahnkanten eines Werkstücks und/oder bei der Bearbeitung mehrerer identischer Werkstücke in aufeinanderfolgenden Schritten mit dem gleichen Fingerfräser zur Bearbeitung der gleichen Zahnkanten unterschiedliche axiale Bereiche der Mantelfläche des Fingerfräsers mit der jeweils zu bearbeitenden Kante des Werkstücks in Eingriff kommen.

In einer möglichen Ausgestaltung der vorliegenden Erfindung ist die Bearbeitungsfunktion so ausgeführt, dass die Werkzeugaufnahme zumindest über Teilbereiche einer Zahnlücke nur über die zweite Linearachse Z und nicht über die erste Linearachse X gesteuert entlang der Kontur der zu bearbeitenden Kante geführt wird, und/oder nur über die erste Linearachse X und nicht über die zweite Linearachse Z gesteuert entlang der Kontur der zu bearbeitenden Kante geführt wird. Die Verfahrbewegung über die erste Linearachse X hat den Vorteil, dass eine Bearbeitung auch noch bei sehr nahe an der Kante liegenden Störkonturen möglich ist. Die Verfahrbewegung über die zweite Linearachse Z hat den Vorteil, dass der Verschleiß über die Länge der Fingerfräsers verteilt werden kann.

Die Relativbewegung zwischen der Werkzeugspindel und der Werkstückspindel während der Anfasbearbeitung einer Kante kann zumindest über Teilbereiche einer Zahnlücke ausschließlich über die erste Linearachse X oder die zweite Linearachse Z erfolgen, d. h. es werden auch keine anderen Achsen des Bearbeitungskopfes verfahren. Alternativ können zusätzlich zu einer oder beiden dieser Achsen jedoch auch noch andere Bewegungsachsen der Vorrichtung eingesetzt werden, um den in der Werkzeugaufnahme aufgenommenen Fingerfräser gesteuert entlang der Kontur der zu bearbeitenden Kante des Werkstücks zu führen, insbesondere eine oder mehrere Schwenkachsen.

In einer möglichen Ausgestaltung der vorliegenden Erfindung ist die Bearbeitungsfunktion zum Einsatz eines Fingerfräsers mit einer zylindrischen Mantelfläche oder einer konischen Mantelfläche mit einem Konuswinkel von weniger als 20°, bevorzugt von weniger als 10° ausgelegt.

Der Fingerfräser kann in einer möglichen Ausgestaltung einen verrundeten Kopf aufweisen. Dieser kann ggf. zur Bearbeitung des Zahnfußes eingesetzt werden. Bevorzugt wird aus Gründen eines gleichmäßigen Verschleißes jedoch nur mit der konischen oder zylindrischen Mantelfläche gearbeitet.

In einer möglichen Ausgestaltung der vorliegenden Erfindung ist vorgesehen, dass die Bearbeitungsfunktion mit einer Ausrichtung der Werkzeugaufnahme arbeitet, durch welche ein in der Werkzeugaufnahme aufgenommener Fingerfräser ausgehend von der Werkzeugaufnahme durch die Zahnlücke hindurch zu der Kante der Verzahnung verläuft, welche er bearbeitet. Dies erlaubt die Bearbeitung der Kante auch beim Vorhandensein von Störkonturen.

Die oben genannten Ausgestaltungen der vorliegenden Erfindung sind auch unabhängig von einer Variation der Drehzahl der Werkstückaufnahme von Vorteil und Gegenstand der vorliegenden Erfindung.

Gemäß einem zweiten, bevorzugten Aspekt umfasst die vorliegende Erfindung daher eine Vorrichtung zur Anfasbearbeitung eines verzahnten Werkstücks, mit einer Werkstückspindel mit einer um eine Drehachse drehbar gelagerten Werkstückaufnahme zur Aufnahme des Werkstücks, einer Werkzeugspindel mit einer um eine Drehachse drehbar gelagerten Werkzeugaufnahme zur Aufnahme eines Fingerfräsers, wobei die Werkzeugspindel über eine erste Linearachse X in einer Richtung senkrecht zur Drehachse der Werkstückaufnahme und/oder über eine zweite Linearachse Z parallel zur Drehachse der Werkstückaufnahme relativ zur Werkstückaufnahme verfahrbar ist, und einer Steuerung mit einer Bearbeitungsfunktion, welche zur Anfasbearbeitung eines in der Werkstückaufnahme aufgenommenen verzahnten Werkstücks die Werkzeugspindel über die erste Linearachse X und/oder die zweite Linearachse Z relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird.

Gemäß einer ersten Variante ist der zweite Aspekt dadurch gekennzeichnet, dass die Bearbeitungsfunktion die Werkzeugspindel über die erste Linearachse X und/oder die zweite Linearachse Z so ansteuert, dass unterschiedliche axiale Bereiche der Mantelfläche eines in der Werkzeugaufnahme aufgenommener Fingerfräser mit der zu bearbeitenden Kante des Werkstücks in Eingriff kommen. Hierdurch wird der Verschleiß über die axiale Länge des Fingerfräsers verteilt. Bevorzugt erfolgt dies durch eine Verfahrbewegung durch die zweite Linearachse Z.

Insbesondere können während der Bearbeitung einer Zahnkante und insbesondere über eine Zahnlücke unterschiedliche axiale Bereiche der Mantelfläche eines in der Werkzeugaufnahme aufgenommenen Fingerfräsers mit der zu bearbeitenden Kante des Werkstücks in Eingriff kommen.

Alternativ oder zusätzlich können zur Bearbeitung unterschiedlicher Zahnkanten eines Werkstücks und/oder bei der Bearbeitung mehrerer identischer Werkstücke in aufeinanderfolgenden Schritten mit dem gleichen Fingerfräser zur Bearbeitung der gleichen Zahnkanten unterschiedliche axiale Bereiche der Mantelfläche des Fingerfräsers mit der jeweils zu bearbeitenden Kante des Werkstücks in Eingriff kommen.

Bevorzugt ist bei der ersten Variante des zweiten Aspekts die Bearbeitungsfunktion so ausgestaltet, dass die Position der Werkzeugspindel relativ zur Werkstückaufnahme über die zweite Linearachse Z verändert wird, um unterschiedliche axiale Bereiche der Mantelfläche eines in der Werkzeugaufnahme aufgenommener Fingerfräser mit der zu bearbeitenden Kante des Werkstücks in Eingriff kommen.

Diese Veränderung der Position über die zweite Linearachse Z kann während der Bearbeitung einer Zahnkante und insbesondere über eine Zahnlücke erfolgen, und/oder bei der Bearbeitung unterschiedlicher Zahnkanten eines Werkstücks und/oder bei der Bearbeitung der gleichen Zahnkante mehrerer identischer Werkstücke in aufeinanderfolgenden Schritten.

In einer möglichen weiteren Variante des zweiten Aspektes, welche bevorzugt mit der ersten Variante kombiniert wird, ist die Bearbeitungsfunktion so ausgeführt, dass die Werkzeugaufnahme zumindest über Teilbereiche einer Zahnlücke nur über die zweite Linearachse Z und nicht über die erste Linearachse X gesteuert entlang der Kontur der zu bearbeitenden Kante geführt wird.

Die Relativbewegung zwischen der Werkzeugspindel und der Werkstückspindel während der Anfasbearbeitung einer Kante kann zumindest über Teilbereiche einer Zahnlücke ausschließlich über die zweite Linearachse Z erfolgen, d. h. es werden auch keine anderen Achsen des Bearbeitungskopfes verfahren. Alternativ können zusätzlich zu der zweiten Linearachse Z jedoch auch noch andere Bewegungsachsen der Vorrichtung eingesetzt werden, um den in der Werkzeugaufnahme aufgenommenen Fingerfräser gesteuert entlang der Kontur der zu bearbeitenden Kante des Werkstücks zu führen, insbesondere eine oder mehrere Schwenkachsen.

Gemäß einer bevorzugten Ausgestaltung des zweiten Aspekts ist die Bearbeitungsfunktion zum Einsatz eines Fingerfräsers mit einer zylindrischen Mantelfläche oder einer konischen Mantelfläche mit einem Konuswinkel von weniger als 20°, bevorzugt von weniger als 10° ausgelegt. Dies erlaubt die Bearbeitung von Kanten, welche durch Störkonturen schlecht zugänglich sind, und/oder die Verteilung des Verschleißes über die axiale Länge des Fingerfräsers.

Der Fingerfräser kann in einer möglichen Ausgestaltung einen verrundeten Kopf aufweisen. Dieser kann ggf. zur Bearbeitung des Zahnfußes eingesetzt werden. Bevorzugt wird aus Gründen eines gleichmäßigen Verschleißes jedoch nur mit der konischen oder zylindrischen Mantelfläche gearbeitet.

Gemäß einer zweiten Variante des zweiten Aspekts ist die Bearbeitungsfunktion so ausgelegt, dass mit einer Ausrichtung der Werkzeugaufnahme gearbeitet wird, durch welche ein in der Werkzeugaufnahme aufgenommener Fingerfräser ausgehend von der Werkzeugaufnahme durch die Zahnlücke hindurch zu der Kante der Verzahnung verläuft, welche er bearbeitet. Insbesondere kann es sich hierbei um einen Bearbeitungsmodus der Bearbeitungsfunktion handeln. Hierdurch ist die Bearbeitung von Kanten, welche durch Störkonturen schlecht zugänglich sind, möglich. Bevorzugt ist die Bearbeitungsfunktion so ausgelegt, dass ein in der Werkzeugaufnahme aufgenommener Fingerfräser nur mit seiner Spitze über jene Stirnseite des Werkstücks, deren Kante mit der Verzahnung durch den Fingerfräser bearbeitet wird, herausragt.

Die einzelnen Varianten des zweiten Aspekts können jeweils einzeln und unabhängig voneinander zum Einsatz kommen und sind unabhängig voneinander Gegenstand der vorliegenden Erfindung. Bevorzugt werden jedoch mindestens zwei der Varianten miteinander kombiniert, weiter bevorzugt drei Varianten, weiter bevorzugt alle Varianten.

In einer möglichen Ausgestaltung der vorliegenden Erfindung wird die Werkzeugspindel beim Durchfahren einer Zahnlücke nicht verschwenkt. Ist eine Schwenkachse vorhanden, über welche die Werkzeugspindel verschwenkbar ist, kann diese jedoch zur initialen Ausrichtung des Fingerfräser relativ zum Werkstück genutzt werden.

In einer möglichen Ausgestaltung der vorliegenden Erfindung ist die Werkzeugspindel um eine erste Schwenkachse A oder A2 verschwenkbar.

In einer möglichen Ausgestaltung der vorliegenden Erfindung ist die Bearbeitungsfunktion so ausgestaltet, dass sie die Werkzeugspindel über die erste Schwenkachse A oder A2 beim Durchfahren einer Zahnlücke verschwenkt, um Variationen des in einer die Zahnflanke senkrecht schneidenden Ebene gemessenen Winkels der Fase über die Zahnlücke zu verringern.

Anders als gemäß der DE 20 2012 008 601 U1 erfolgt die Verschwenkung während der Bearbeitung daher nicht zur Erzeugung unterschiedlicher Fasenwinkel über die Zahnlücke, sondern im Gegenteil zur Verringerung von Variationen im Fasenwinkel, welche bei einer Verfahrbewegung nur über die Linearachsen der Vorrichtung entstehen würden.

Bevorzugt verläuft die erste Schwenkachse A senkrecht zu der Drehachse der Werkstückaufnahme und/oder parallel zu der ersten Linearachse X.

Alternativ oder zusätzlich kann die erste Schwenkachse A2 in einer Ebene verlaufen, welche senkrecht auf der ersten Linearachse X steht.

Gemäß einem dritten bevorzugten Aspekt umfasst die vorliegende Erfindung eine Vorrichtung zur Anfasbearbeitung eines verzahnten Werkstücks, mit einer Werkstückspindel mit einer um eine Drehachse drehbar gelagerten Werkstückaufnahme zur Aufnahme des Werkstücks, einer Werkzeugspindel mit einer um eine Drehachse drehbar gelagerten Werkzeugaufnahme zur Aufnahme eines Fingerfräsers, wobei die Werkzeugspindel über eine erste Linearachse X in einer Richtung senkrecht zur Drehachse der Werkstückaufnahme und über eine zweite Linearachse Z parallel zur Drehachse der Werkstückaufnahme relativ zur Werkstückaufnahme verfahrbar ist, und einer Steuerung mit einer Bearbeitungsfunktion, welche zur Anfasbearbeitung eines in der Werkstückaufnahme aufgenommenen verzahnten Werkstücks die Werkzeugspindel über die erste Linearachse X und/oder die zweite Linearachse Z relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird. Der dritte Aspekt ist dadurch gekennzeichnet, dass die Werkzeugspindel über eine dritte Linearachse Y oder V verfahrbar ist, welche in einer Ebene verläuft, die senkrecht auf der ersten Linearachse X steht.

Die dritte Linearachse ermöglicht eine vereinfachte und/oder gleichmäßigere Anfasbearbeitung insbesondere von Schrägverzahnungen.

Die dritte Linearachse kann insbesondere dazu eingesetzt werden, um den Fingerfräser für die Bearbeitung einer Kante der Verzahnung in einer Nullstellung relativ zur Verzahnung zu positionieren, in welcher der Fingerfräser mittig in der Zahnlücke angeordnet ist, wobei die Kontaktstelle zwischen Fingerfräser und zu bearbeitender Kante gegenüber einer Ebene, welche durch die Drehachse der Werkstückaufnahme parallel zur ersten Linearachse X verläuft, seitlich verschoben ist.

Die Verfahrbewegung des Fingerfräsers zum Abfahren der Kontur der Kante kann dann in einer möglichen Ausgestaltung der vorliegenden Erfindung ohne eine Verfahrbewegung der dritten Linearachse Y oder V erfolgen. Alternativ kann die dritte Linearachse Y oder V jedoch auch während der Anfasbearbeitung einer Kante zum Abfahren der Kontur der Kante eingesetzt werden.

Bevorzugt wird Werkzeugspindel für die Anfasbearbeitung über die dritte Linearachse Y oder V so angeordnet wird, dass die Drehachse der Werkzeugaufnahme die Drehachse der Werkstückaufnahme nicht schneidet und bevorzugt windschief zu dieser verläuft.

Weitere bevorzugte Ausgestaltungen werden im folgenden näher beschrieben:
In einer möglichen Ausgestaltung der vorliegenden Erfindung ist die Bearbeitungsfunktion so ausgelegt, dass im Bereich des Zahnfußes keine Fase oder eine kleinere Fase erzeugt wird als an der Zahnflanke. Insbesondere erfolgt dies durch eine Entsprechende Ansteuerung der Bewegungsachsen der Verzahnmaschine, über welche der Fingerfräser gesteuert entlang der Kontur der Kante bewegt wird.

Durch diese Vorgehen kann dem Umstand Rechnung getragen werden, dass zur Erzeugung einer größeren Fase im Bereich des Zahnfußes ein Fingerfräser mit einem entsprechend kleinen Radius eingesetzt werden muss, da der Zahnfuß üblicherweise einen recht geringen Radius aufweist.

Durch den Verzicht auf eine Fase im Zahnfuß oder eine kleinere Fase in diesem Bereich können dagegen Fingerfräser mit einem Durchmesser eingesetzt werden, welcher größer ist als der Durchmesser des Zahnfußes, ohne eine Kollision des Fingerfräsers mit einer Zahnflanke beim Bearbeiten der Kante des Zahnfußes zu bewirken.

In einer möglichen Ausgestaltung der vorliegenden Erfindung ist die Werkzeugspindel über eine zweite Schwenkachse A2 verschwenkbar, welche senkrecht zu ihrer Drehachse ausgerichtet ist und in einer Ebene verläuft, die senkrecht auf der ersten Linearachse X steht. Die zweite Schwenkachse A2 kann zusätzlich oder anstelle der ersten Schwenkachse A vorgesehen sein.

Die zweite Schwenkachse A2 erlaubt die Einstellung des Fasenwinkels und/oder das Bearbeitungen von oberen und unteren Kanten einer Verzahnung.

In einer möglichen Ausgestaltung der vorliegenden Erfindung ist die Werkzeugspindel über die zweite Schwenkachse A2 aus einer ersten Bearbeitungsposition zur Bearbeitung einer unteren Kante des Werkstücks in eine zweite Bearbeitungsposition zur Bearbeitung einer oberen Kante verschwenkbar.

In einer möglichen Ausgestaltung der vorliegenden Erfindung erlaubt die zweite Schwenkachse A2 ein Verschwenken der Drehachse der Werkzeugaufnahme in einer Ebene erlaubt, in welcher die erste Schwenkachse A verläuft.

Bei der zweiten Schwenkachse A2 kann es sich um eine Stellachse handeln. Beispielsweise können in diesem Fall die Bearbeitungspositionen durch Anschläge definiert werden, insbesondere verstellbare Anschläge.

In einer alternativen Ausgestaltung handelt es sich bei der zweiten Schwenkachse A2 um eine NC-Achse. Über die oben genannten Funktionen hinaus kann die zweite Schwenkachse A2 in diesem Fall auch während der Anfasbearbeitung genutzt werden, um den Fingerfräser an der zu bearbeitenden Kante gesteuert entlang zu verfahren und dabei insbesondere zur Beeinflussung des Fasenwinkels eingesetzt werden.

In einer möglichen Ausgestaltung der vorliegenden Erfindung handelt es sich bei der mindestens einen Bewegungsachse und/oder der ersten Linearachse und/oder der zweiten Linearachse Z und/oder der dritten Linearachse Y oder V und/oder der ersten Schwenkachse A um NC-Achsen.

In einer möglichen Ausgestaltung der vorliegenden Erfindung umfasst die Vorrichtung einen Einfädelsensor. Dieser erlaubt es, die Position der Zahnlücken und/oder Zahnköpfe der Verzahnung zu bestimmen und hieraus die richtige Zuordnung zwischen Fingerfräser und Verzahnung vorzunehmen. Insbesondere kann es sich um einen berührungslos arbeitenden Einfädelsensor handeln, beispielsweise um einen induktiven Sensor.

In einer möglichen Ausgestaltung der vorliegenden Erfindung ist der Einfädelsensor an einem Bearbeitungskopf angeordnet ist, welcher über mindestens eine Bewegungsachse bewegbar ist und auch die Werkzeugspindel trägt. Die mindestens eine Bewegungsachse kann daher sowohl zur Positionierung des Einfädelsensors, als auch des Fingerfräsers relativ zur Verzahnung genutzt werden.

In einer möglichen Ausgestaltung der vorliegenden Erfindung ist die Werkzeugspindel über eine zweite Schwenkachse A2 verschwenkbar an dem Bearbeitungskopf angeordnet, welcher den Einfädelsensor trägt, so dass die Werkzeugspindel durch die Bearbeitungsfunktion in eine Neutralstellung verschwenkbar ist, während die Verzahnung durch den Einfädelsensor vermessen wird.

In einer möglichen Ausgestaltung ist die Bearbeitungsfunktion so ausgeführt, dass nur in Teilbereichen der zweiten Kante eine Fase erzeugt wird. Insbesondere können hierdurch jene Bereiche der Kante, in welchen nicht ausreichend Material zur Erzeugung einer Fase zur Verfügung steht, bei der Anfasbearbeitung ausgespart werden.

Der Fingerfräser kann daher auch bei Verzahnungen von Wellen eingesetzt werden, bei welchen der Zahnfuß im Wesentlichen dem Radius der Welle entspricht und daher in diesem Bereich keine Zahnkante vorhanden ist. Da der Fingerfräser NC-gesteuert entlang der Zahnkante geführt wird, während das Werkstück gedreht wird, können hier beispielsweise nur die Zahnköpfe und die Zahnflanken unter Aussparung des Zahnfußes angefast werden.

In einer möglichen Ausgestaltung umfasst die Steuerung eine Funktion zur Eingabe eines Parameters der gewünschten Fasenform und/oder eine Funktion zur Bestimmung der Fasenform aus einem oder mehreren Parametern der Lückenkontur der Verzahnung, welche angefast werden soll.

Insbesondere kann es sich bei dem Parameter der Fasenform um eine Fasenbreite und/oder eine Fasentiefe und/oder einen Fasenwinkel und/oder eine Symmetrieeigenschaft handeln.

Insbesondere kann es sich bei dem einem oder den mehreren Parametern der Lückenkontur der Verzahnung um einen oder mehrere Parameter handeln, welche über eine Funktion zur Einrichtung des Verzahnungsprozesses, mit welchem die Verzahnung erzeugt wird, eingebbar sind. Hierdurch ist kein CAD-Modell der Verzahnung und/oder Fase notwendig.

In einer möglichen Ausgestaltung wird die Fasenform anhand des eingegebenen Parameters der Fasenform und des einen oder der mehreren Parameter der Lückenkontur bestimmt.

In einer möglichen Ausgestaltung umfasst die Steuerung eine Eingabefunktion, über welche eine gewünschte Fasenform vorgebbar ist, wobei die Steuerung weiterhin eine Berechnungsfunktion umfasst, über welche auf Grundlage der gewünschten Fasenform eine erzielbare Fasenform bestimmt wird. Insbesondere kann die Berechnungsfunktion eine Ausgleichrechnung durchführen, welche die Parameter des Anfasverfahrens so bestimmt, dass eine Abstandsfunktion, welche den Abstand der erzielbaren Fasenform von der gewünschten Faseform misst, minimiert wird.

In einer möglichen Ausgestaltung kann eine gewünschte Fasenform vorgebbar sein, bei welcher die Fasenbreite und/oder die Fasentiefe und/oder der Fasenwinkel über die Zahnlücke variiert.

In einer möglichen Ausgestaltung umfasst die Steuerung eine Anzeigefunktion, welche die gewünschte Fasenform sowie die erzielbare Fasenform graphisch darstellt, um so einen optischen Vergleich der beiden Fasenformen zu ermöglichen, und/oder eine Anzeigefunktion zur Darstellung der Abweichung zwischen der gewünschten Fasenform sowie der erzielbaren Fasenform.

In einer möglichen Ausgestaltung implementiert die Bearbeitungsfunktion eine automatische Anfasbearbeitung einer oder mehreren Kanten der Verzahnung eines Werkstücks und bevorzugt einer Vielzahl von identischen Werkstücken.

Die Steuerung der Vorrichtung ist bevorzugt so programmiert, dass die erfindungsgemäßen Vorrichtungen die oben im Hinblick auf deren Funktionsweise und/oder Anwendung beschriebenen Schritte automatisch durchführt, und/oder die im Folgenden noch beschriebenen Verfahren automatisch durchführt.

Die Steuerung weist insbesondere einen Mikroprozessor und einen Speicher auf, in welchem ein Steuerprogramm zur Ansteuerung der Vorrichtung abgespeichert ist, welches durch den Mikroprozessor abgearbeitet wird.

Die vorliegende Erfindung stellt zunächst eine Vorrichtung, wie sie oben näher beschrieben wurde, unter Schutz, welche zur Aufnahme eines Fingerfräsers in der Werkzeugaufnahme und zur Durchführung der oben beschriebenen Anwendungen geeignet ist. Insbesondere weist die Vorrichtung eine Steuerung auf, welche den Einsatz solcher Werkzeuge zur Anfasbearbeitung einer Kante ermöglicht.

Die vorliegende Erfindung umfasst jedoch ebenfalls eine Vorrichtung, wie sie oben beschrieben ist, bei welcher ein Fingerfräser in der Werkzeugaufnahme aufgenommen ist.

Bei der Vorrichtung kann es sich in einer ersten Ausführungsform um eine stand-alone Anfasmaschine handeln.

In einer zweiten Ausführungsform handelt es sich bei der erfindungsgemäßen Vorrichtung dagegen um eine in ein Verzahnbearbeitungszentrum integrierte Anfasmaschine.

Die vorliegende Erfindung betrifft weiterhin ein Verzahnbearbeitungszentrum mit einer Vorrichtung, wie sie oben beschrieben wurde, einer Verzahnmaschine und einem Werkstückwechsler. Bevorzugt handelt es sich bei der Verzahnmaschine um eine Verzahnungsstoßmaschine oder um eine Wälzschälmaschine oder eine Verzahnungsfräsmaschine. Bevorzugt erfolgt die Verzahnbearbeitung und das Anfasen der Werkstücke in dem Verzahnbearbeitungszentrum taktzeit-parallel. Insbesondere werden durch die Verzahnmaschine verzahnte Werkstücke über den Werkstückwechsler zur Vorrichtung gemäß der vorliegenden Erfindung zum Anfasen weiter transportiert, um angefast zu werden, während auf der Verzahnmaschine bereits das nächste Werkstück verzahnt wird. Dabei ist auch ein Anfasen des Werkstücks zwischen einem Schruppschritt und einem Schlichtschritt denkbar, wofür das Werkstück bevorzugt von der Verzahnmaschine zu der erfindungsgemäßen Vorrichtung und wieder zurück verfahren wird.

Bevorzugt handelt es sich bei dem Werkstückwechsler um eine Ring-Automation, wobei weiterhin bevorzugt die erfindungsgemäße Vorrichtung zum Anfasen sowie die Verzahnmaschine an unterschiedlichen Winkelpositionen der Ring-Automation angeordnet sind.

Bevorzugt weisen die Verzahnmaschine und die erfindungsgemäße Vorrichtung separate Werkstückaufnahmen auf. Der Werkstückwechsler wechselt in diesem Fall ein Werkstück nach der Verzahnbearbeitung der Verzahnmaschine von der dortigen Werkstückaufnahme zur Werkstückaufnahme der erfindungsgemäßen Vorrichtung zum Anfasen.

In einer alternativen Ausgestaltung kann das Verzahnbearbeitungszentrum jedoch auch mehrere Werkstückaufnahmen aufweisen, in welchen die Werkstücke für die Verzahnbearbeitung und die Anfasbearbeitung verbleiben. In diesem Fall werden die Werkstückaufnahmen bevorzugt von der Verzahnmaschine zu der erfindungsgemäßen Vorrichtung bewegt und/oder umgekehrt.

Der Werkstückwechsler wird bevorzugt dazu eingesetzt, um Werkstücke von einer externen Transportstrecke oder anderen Bearbeitungsstationen auf die Werkstückaufnahme oder Werkstückaufnahmen aufzulegen und von diesen abzunehmen. Gemäß einem weiteren Aspekt der vorliegenden Erfindung kann die erfindungsgemäße Vorrichtung auch als eine separate stand-alone Maschine ausgeführt sein. Bevorzugt erhält diese verzahnte Werkstücke von einer Transportstrecke und/oder Automation, um diese Anfaszubearbeiten. Die entsprechend bearbeiteten Werkstücke werden dann bevorzugt wieder einer Transportstrecke und/oder Automation übergeben.

Die vorliegende Erfindung umfasst weiterhin ein Verfahren gemäß Anspruch 14 zur Anfasbearbeitung einer Kante eines verzahnten Werkstücks mittels einer Vorrichtung, wie sie oben beschrieben wurde.

Bevorzugt wird im Rahmen des Verfahrens zur Anfasbearbeitung eines in der Werkstückaufnahme aufgenommenen verzahnten Werkstücks die Werkzeugspindel über die mindestens eine Linearachse relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird.

Bevorzugt erfolgt die Anfasbearbeitung so, wie dies oben näher beschrieben wurde.

Das erfindungsgemäße Verfahren und die erfindungsgemäße Vorrichtung können sowohl zur Bearbeitung einer Kante einer Außenverzahnung als auch zur Bearbeitung einer Kante einer Innenverzahnung eingesetzt werden.

Bei dem Werkstück kann es sich im einfachsten Fall um ein Zahnrad mit nur einer Verzahnung handeln. Solche Werkstücke können zwar auch mit einem Chamfer-Cut-Verfahren angefast werden. Hier wird jedoch ein an die Verzahnung speziell angepasstes, teures Werkzeug benötigt. Die vorliegende Erfindung erlaubt dagegen eine flexible Anfasbearbeitung im wesentlichen beliebiger Geometrien.

Das erfindungsgemäße Verfahren und die erfindungsgemäße Vorrichtung können sowohl zur Bearbeitung einer Kante einer evolventischen als auch zur Bearbeitung einer Kante einer nicht-evolventischen Verzahnung eingesetzt werden.

Bevorzugt werden das erfindungsgemäße Verfahren und die erfindungsgemäße Vorrichtung zur Anfasbearbeitung eines Werkstücks mit einer Mehrfachverzahnung oder anderen Störkonturen eingesetzt.

Insbesondere können das erfindungsgemäße Verfahren und die erfindungsgemäße Vorrichtung zur Bearbeitung mindestens einer neben einer Störkontur liegenden Kante, insbesondere einer Kante einer Mehrfachverzahnung eingesetzt werden.

In einer möglichen Ausgestaltung der vorliegenden Erfindung kann die Größe der Fase unter Berücksichtigung des Aufmaßes von Folgeprozessen über die Zahnlücke variieren.

Beispielsweise kann die Fasengröße über der Zahnlücke und insbesondere die Zahnhöhe unterschiedlich gestaltet werden, damit nach einem Folgeprozess, beim dem ein beim Anfasen noch vorhandenes Flankenaufmaß abgetragen wird, die Größe der Fase am fertigen Werkstück überall gleich ist. Beispielsweise kann bei der dem Folgeprozess der Abtrag über die Zahnlücke und insbesondere die Zahnflanke unterschiedlich groß sein, was durch die Erzeugung einer unterschiedlich große Fase berücksichtigt wird. Bei dem Folgeprozess kann es sich beispielsweise um eine Hartfeinbearbeitung, insbesondere durch Schleifen, handeln.

In einer möglichen Ausgestaltung der vorliegenden Erfindung wird in einem ersten Bearbeitungsschritt eine Fase erzeugt, wobei die erste Fase vermessen wird und hieraus Korrekturwerte bestimmt werden, welche in einem zweiten Bearbeitungsschritt berücksichtigt werden.

In einer ersten möglichen Anwendung wird der erste Bearbeitungsschritt an einem ersten Werkstück und der zweite Bearbeitungsschritt an einem zweiten Werkstück vorgenommen. Insbesondere kann im Rahmen einer Serienfertigung beim Einfahren des Prozesses die Fase auf volle Tiefe gefertigt und vermessen werden und die Bearbeitung für das Folgewerkstück korrigiert werden.

In einer zweiten möglichen Anwendung werden der erste Bearbeitungsschritt und der zweite Bearbeitungsschritt an dem selben Werkstück vorgenommen, wobei die erste Fase noch nicht die gewünschte Tiefe aufweist und dann im zweiten Bearbeitungsschritt auf volle Tiefe gefräst wird. Ein solches Vorgehen ist insbesondere bei teuren Werkstücken, z.B. bei größeren Werkstücken oder aber auch bei sehr kleiner Losgröße, interessant

Weiterhin kann die Steuerung der Vorrichtung eine Eingabefunktion aufweisen, über welche die Messwerte eingebbar und/oder an die Steuerung übertragbar sind, wobei eine Berechnungsfunktion der Steuerung die Korrekturwerte bestimmt.

Die vorliegende Erfindung wird nun anhand von Ausführungsbeispielen sowie Figuren näher beschrieben.

Dabei zeigen:

Fig. 1a und Fig. 1b: Fig. 1: ein Ausführungsbeispiel einer erfindungsgemäßen Verzahnmaschine;

Fig. 2: Man erkennt das Werkzeug (hier einen konischen Fräser 21, der in eine Zahnlücke zugestellt ist und eine Fase erzeugt. Der Fräser berührt die Linien 22, die die Zahnlücke bis zu der Höhe, bei der die Fase ansetzt, darstellen.

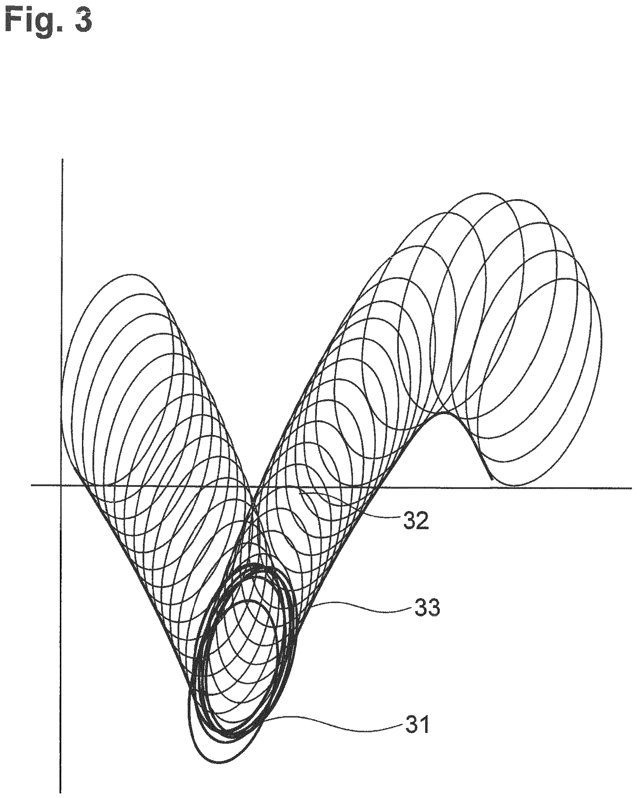

Fig. 3: Es sind die Ebenenschnitte des Werkzeuges (hier ein konischer Fräser) und der Stirnschnittebene auf der Höhe, an der die Fase ansetzt, als Ellipsen dargestellt. Die fett gekennzeichnete Linie 33 ist die Profillinie. Die fett gedruckten Ellipsen 31 sind die Fräserpositionen, in denen der Fräser die Profillinie nicht berührt, sondern schneidet. Diese Kollisionen entstehen beim gezeigten Beispiel nahe des Zahnfußes auf der rechten Flanke. Das bedeutet, dass die Zahnflanke und auch der Zahnfuß durch den Fingerfräser beschädigt wird. Diese Positionen müssen vermieden werden. Die Kollisionen treten vor allem im Zahnfuß auf, was daran zu erkennen ist, dass die Ellipsen, die keine Kollision erzeugen 32, an der Zahnflanke vorherrschen.

Fig. 4: Es ist für einen Parametersatz der Drehwinkel des Werkzeugs $\varphi_W$ der berechneten Kinematik gegen den Fräsfortschritt $\sigma$ aufgetragen. Der Verlauf ist nicht linear, was zeigt, dass der Drehwinkels nicht einfach vorgegeben werden kann, sondern, dass der Drehwinkel sich aus der Kinematikberechnung ergibt. Das Werkstück dreht im Gegensatz zu der in Fig. 6 dargestellten Kinematik nicht zurück.

Fig. 4a: Für die gleiche Kinematik, von der der Drehwinkel $\varphi_W$ in Fig. 4 gegen den Fräsfortschritt $\sigma$ dargestellt ist, ist in Fig. 4a die Drehgeschwindigkeit $\dot{\varphi}_W$ gegen den Fräsfortschritt $\sigma$ dargestellt.

Fig. 5: Für die gleiche Kinematik, von der der Drehwinkel $\varphi_W$ in Fig. 4 dargestellt ist, ist die Fräserhöhe z gegen den Drehwinkel des Werkstücks $\varphi_W$ aufgetragen.

Fig. 6: Für einen, von der in Fig. 4 und 5 dargestellten Kinematik verschiedenen, Parametersatz ist der Drehwinkel des Werkstücks $\varphi_W$ gegen den Fräsfortschritt $\sigma$ aufgetragen. Hier kann man deutlich erkennen, dass das Werkstück während der Bearbeitung zurückdrehen muss.

Fig. 6a: Für die gleiche Kinematik, von der der Drehwinkel $\varphi_W$ in Fig. 6 gegen den Fräsfortschritt $\sigma$ dargestellt ist, ist in Fig. 6a die Drehgeschwindigkeit $\dot{\varphi}_W$ gegen den Fräsfortschritt $\sigma$ dargestellt.

Fig. 7: Für die gleiche Kinematik, von der der Drehwinkel $\varphi_W$ in Fig. 6 dargestellt ist, ist die Fräserhöhe z gegen den Drehwinkel des Werkstücks $\varphi_W$ aufgetragen. Man erkennt deutlich den Effekt des Zurückdrehens des Werkstücks.

Fig. 8: Man erkennt zwei Profillinien im Stirnschnitt. Die obere Kurve 81 beschreibt die Profillinie auf der Höhe, auf der die Fase ansetzt, die untere Kurve 82 die Profillinie der Fase auf der Stirnseite des Zahnrades. Da es sich in dem Beispiel um eine Schrägverzahnung handelt, wurde die obere Profillinie so gedreht, dass die Symmetrie der Fase evaluiert werden kann. Man kann deutlich die Symmetrie der berechneten Fase erkennen.

Fig. 9: Da der Fräser einen größeren Radius als der Fußkreisradius besitzt, treten Kollisionen auf (siehe Fig. 3), wenn man die vollständige Fußrundung anfasen würde. Deswegen muss die Kinematik entsprechend angepasst werden. Diese Anpassung führt dazu, dass die Fase nicht exakt erreicht wird. Dieser Effekt ist durch die mittlere Linie 93 dargestellt. Dies ändert nichts in der Symmetrie der Fase auf der rechten und linken Flanke.

Fig. 10: Durch eine andere Wahl der Parameter wird eine andere Fase definiert. Mit den gleichen Vorgaben, wie in der in Fig. 8 dargestellten Fase, aber geänderten Parametern, wird die Fase asymmetrisch. Die Fig. zeigt wie in Fig. 8 die bereits gedrehten Profillinien (hier 101 und 102), sodass der Vergleich möglich ist.

Fig. 11: Für das hier vorgestellte Verfahren kann der Anfang der Fase durch eine glatte Jordankurve gegeben werden. Diese Kurve kann in einem Stirnschnitt liegen, muss es aber nicht. Eine solche Kurve 111 ist hier abgebildet. Die Flanken sollen hier angefast werden, wohingegen im Zahnfuß keine ausgeprägte Fase gefordert wird. Die Zahnlücke ist durch das Gitter 112 gegeben.

Fig. 12: Man kann in der oberen Zeile mehrere Verzahnungen erkennen, welche mit dem Gratomat® entgratet werden können. In der unteren Zeile dagegen sind zwei Verzahnungen zu erkennen, die ab dem Teilkreis abgeschrägt bzw. gestuft sind. Diese Verzahnungen können nicht mit dem Gratomat® entgratet werden. Mit dem hier vorgestellten Verfahren ist die Entgratung bzw. Anfasbearbeitung all dieser Verzahnungen kein Problem.

Fig. 13: den Einsatz eines am Bearbeitungskopf der Vorrichtung angeordneten Einfädelsensors zur Vermessung einer Außenverzahnung,

Fig. 14: den Einsatz eines am Bearbeitungskopf angeordneten Einfädelsensors zur Vermessung einer Innenverzahnung,

Fig. 15: die Anfasbearbeitung einer unteren, innenliegenden Kante einer Verzahnung bei einem Werkstück mit Mehrfachverzahnung,

Fig. 16: die Anfasbearbeitung einer oberen, innenliegenden Kante einer Verzahnung bei einem Werkstück mit Mehrfachverzahnung,

Fig. 17: die Anfasbearbeitung einer innenliegenden Kante einer Innenverzahnung bei einem Werkstück mit Mehrfachverzahnung, wofür der Fingerfräser über den Bearbeitungskopf über die Tischmitte verfahren wird,

Fig. 18: die Anfasbearbeitung einer äußeren Kante bei des in Fig. 17 gezeigten Werkstücks mit Innenverzahnung,

Fig. 19: die Bearbeitung der anderen inneren Kante der in Fig. 17 und 18 gezeigten Werkstücks mit Innenverzahnung, wofür das Werkstück über eine obere Werkstückaufnahme gegriffen und angehoben wird, so dass die Innenverzahnung von unten zugänglich ist, und

Fig. 20: die Anfasbearbeitung der anderen äußeren Kante bei dem in Fig. 17 bis 19 gezeigten Werkstück mit Innenverzahnung.

Die Erfindung beschreibt ein Verfahren zum Entgraten bzw. Anfasen von einer Verzahnung mit einem Fingerfräser. Insbesondere können die Verzahnungen gerade oder schrägverzahnte Stirnradverzahnungen sein, welche sowohl zylindrisch als auch konisch (Beveloidverzahnung) ausgeführt sein können.

Die Verzahnungen können sowohl symmetrisch als auch asymmetrisch sein, d.h. die Profilwinkel der linken und rechten Flanke können, müssen aber nicht unterschiedlich sein. Die Profile der Verzahnungen können beliebig gewählt werden, insbesondere auch als Evolvente.

Die Verzahnungen können als Außenverzahnung, aber auch als Innenverzahnung ausgeführt werden.

Die Fingerfräser können zylindrisch oder konisch sein.

Das im folgenden beschriebene Verfahren unterscheidet sich von dem Verfahren, das dem Gratomat® zugrunde liegt, dadurch, dass während bei dem Gratomat® der Fräser durch eine Federkraft an die Verzahnung angedrückt wird, bei dem hier vorliegenden Verfahren die exakte Bewegungskinematik berechnet wird und diese von der Maschine umgesetzt wird. Dadurch lässt sich eine vorgegebene Fase erzeugen. Die Umsetzung der Bewegungskinematik erfolgt bevorzugt durch NC-Achsen der Maschine.

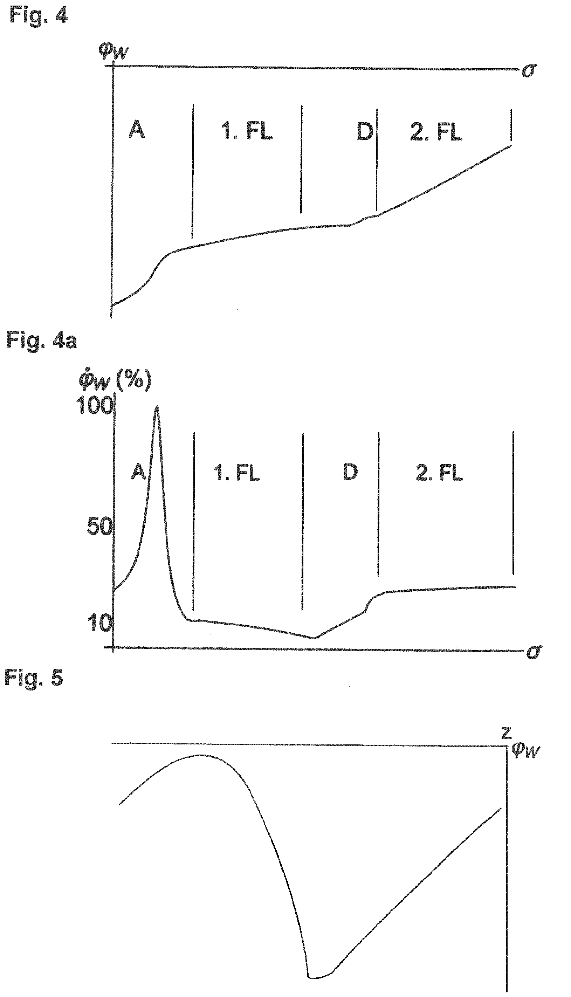

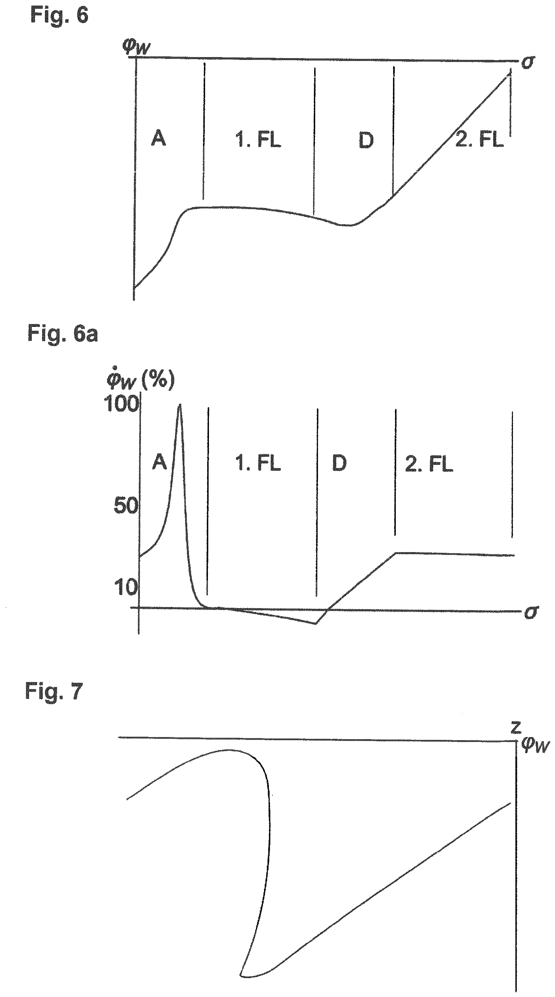

Im Allgemeinen ist die Geschwindigkeit der Tischdrehung bei dem hier vorgeschlagenen Verfahren im Gegensatz zu dem Verfahren des Gratomat® nicht konstant (siehe Fig. 4 und 6), sondern variiert über die Zahnlücke.

Die Drehrichtung des Fräsers kann im Gegensatz zum Verfahren des Gratomat® beliebig gewählt werden.

Im Folgenden wird näher auf die der Erfindung zu Grunde liegende Idee eingegangen.

Um die Zusammenhänge mathematisch zu formulieren, werden folgende Definitionen benötigt:

Für Transformationen werden folgende Bezeichnungen verwendet:

- $R_x(\varphi)$ Rotation um den Winkel $\varphi$ um die x-Achse. Analog für y und z.
- $T_x(v)$ Translation um die Strecke $v$ in x-Richtung. Analog für y und z.

- $H(A_1, ..., A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen.

Weiterhin wichtig für die Formulierung der Zusammenhänge ist es, die kinematischen Ketten, welche die Relativstellungen zwischen Werkstück und Werkzeug beschreiben, zu definieren.

Im Folgenden werden Größen, welche sich auf das Werkzeug beziehen mit Index T versehen und solche, die sich auf das Werkstück beziehen mit Index W.

**Kinematische Kette**

Die relative Lage zwischen Werkzeug und Werkstück wird durch die folgende kinematische Kette $K_R$ beschrieben:

$$K_R = R_z(\varphi_W) \cdot T_z(z_T) \cdot T_y(y_T) \cdot T_x(d) \cdot R_y(\gamma) \cdot R_x\left(\omega - \frac{\pi}{2}\right) \cdot R_z(\varphi_T)$$

- $\varphi_T$: Drehwinkel des Werkzeugs.
- $\omega$: Anstellwinkel des Fräsers zur Verzahnung.
- $\gamma$: Achskreuzwinkel zwischen der Rotationsachse des Fräsers und der Rotationsachse der Verzahnung (z-Achse).
- $y_T$: Betrag der Translation des Fräsers von der Mitte der Verzahnung.
- d: Abstand des Fräsers von der Mitte der Verzahnung.
- $z_T$: Betrag der Translation des Fräsers entlang der Rotationsachse des Werkstückes.
- $\varphi_W$: Drehwinkel des Werkstücks.

Es wird im Bezugssystem des Werkstückes gerechnet.

Diese kinematische Kette dient zunächst der mathematischen Beschreibung der hier beschriebenen Erfindung. Die verwendeten Koordinaten müssen nicht den physikalischen Achsen der Maschine, auf der die Erfindung angewendet wird, übereinstimmen. Verfügt eine spezielle Maschine über einen Bewegungsapparat, der Relativstellungen zwischen Werkzeug und Werkstück gemäß einer Transformation

$$H(A_1, ..., A_{N_S}) \text{ mit } N_S \geq 1$$

ermöglicht, so kann die Erfindung auf dieser Maschine angewendet werden, wenn zu jedem Satz an Koordinaten aus der gerade beschriebenen kinematischen Kette, Koordinaten $A_1, ..., A_{N_S}$ existieren, mit

$$H\left(A_1, ..., A_{N_S}\right) = K_R.$$

Die Berechnung der Koordinaten $A_1, ..., A_{N_S}$ kann mittels einer Koordinatentransformation durchgeführt werden.

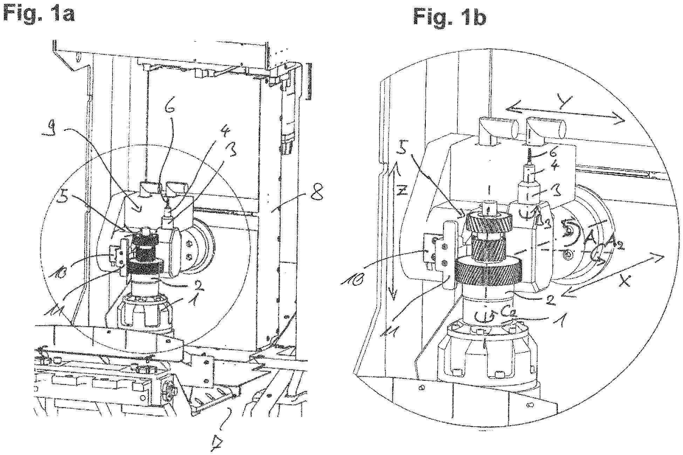

Fig. 1a und b zeigen ein Ausführungsbeispiel für einen Arbeitsraum einer Verzahnmaschine mit einem dort vorhandenen Bewegungsapparat, dessen Koordinatenachsen mit denen, die in der Definition der kinematischen Kette verwendet wurden, übereinstimmen.

Dabei besteht folgende Zuordnung zwischen den Bewegungsachsen der Vorrichtung, welche im folgenden noch näher beschrieben werden, und den Koordinaten, d. h. eine Veränderung der jeweiligen Koordinate erfolgt durch eine Verfahrbewegung der jeweiligen Achse:

| | |
|---|---|
| Drehachse B3 der Werkzeugaufnahme - | $\varphi_T$: Drehwinkel des Werkzeugs. |
| Zweite Schwenkachse A2 - | $\omega$: Anstellwinkel des Fräsers zur Verzahnung. |
| erste Schwenkachse A - | $\gamma$: Achskreuzwinkel zwischen der Rotationsachse des Fräsers und der Rotationsachse der Verzahnung (z-Achse). |
| Dritte Linearachse Y oder V - | $y_T$: Betrag der Translation des Fräsers von der Mitte der Verzahnung. |
| Erste Linearachse X - | $d$: Abstand des Fräsers von der Mitte der Verzahnung. |

(fortgesetzt)

| Zweite Linearachse Z - | $z_T$: Betrag der Translation des Fräsers entlang der Rotationsachse des Werkstücckes. |
| Drehachse C2 der Werkstückaufnahme - | $\varphi_W$: Drehwinkel des Werkstücks. |

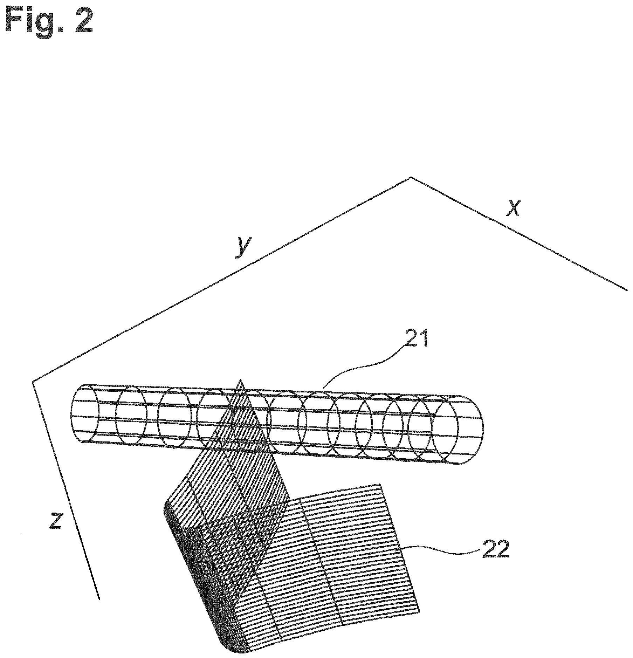

Das Werkzeug (hier der Fingerfräser) wird in eine Lücke zugestellt (siehe Fig. 2) und verfährt im Allgemeinen über eine oder mehrere der Achsen, die durch die Parameter $\omega$, $\gamma$, $y_T$, $d$, $z_T$ und $\varphi_W$ gegeben sind.

Die Rotationsachse des Werkzeugs steht während der Bearbeitung schräg (im Allgemeinen windschief) zu der Rotationsachse des Werkstücks.

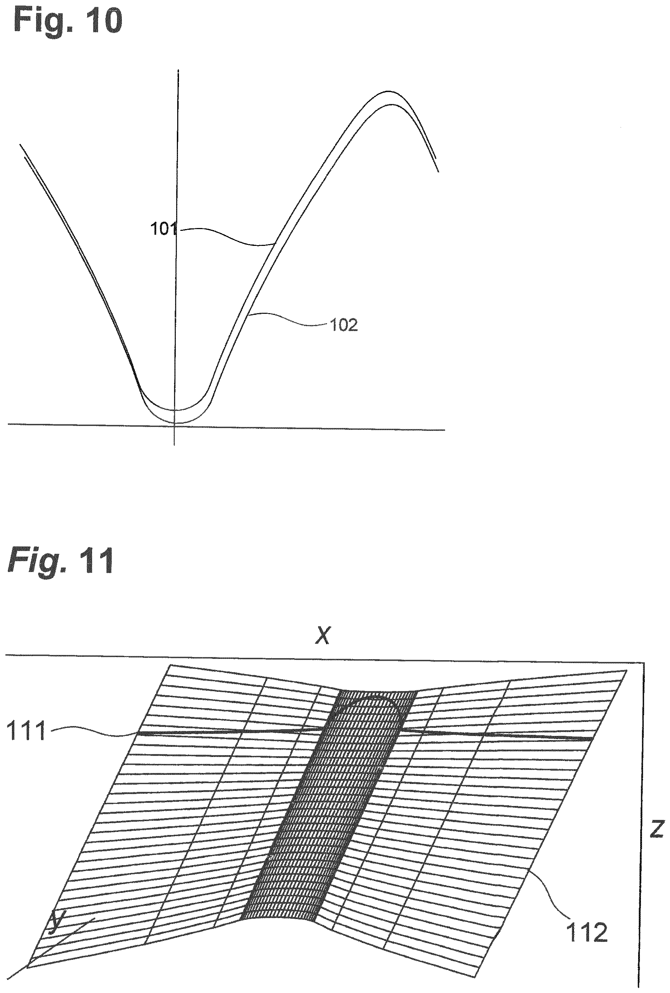

Da der allgemeine Bewegungsapparat eine Vielzahl von Bewegungen zulässt, können Kurven auf der Fase, z.B. der Anfang und das Ende der Fase, als allgemeine glatte Jordankurven vorgegeben werden. Die Kurven müssen im Allgemeinen nicht in einer Stirnschnittebene liegen (siehe Fig. 11 für einen möglichen definierten Anfang einer Fase).

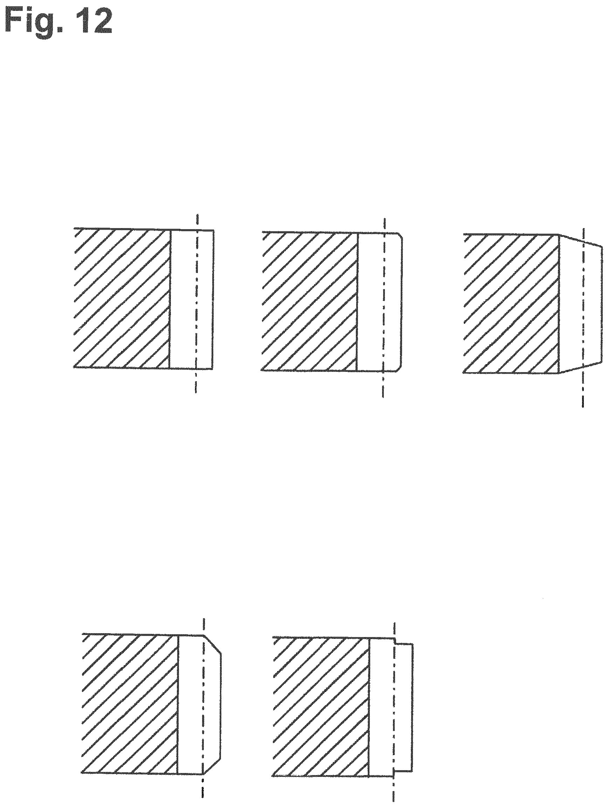

Für das hier vorgestellte Verfahren können auch Werkstücke, die keine ebene Stirnseite besitzen, zugelassen werden. Mögliche Werkstücke können in Fig. 12 betrachtet werden. Die in der obere Zeile gezeigten Formen der Stirnseite können sowohl durch das Gratomat®-Verfahren, als auch durch das hier vorgestellte Verfahren angefast werden. In der unteren Zeile die Zahnflanke sind dagegen Stirnseiten gezeigt, welche beispielhaft ab dem Teilkreis angeschrägt bzw. gestuft sind. Das Verfahren des Gratomat® kann solche Werkstücke nicht bearbeiten, wohingegen das hier vorgestellte Verfahren dieses Werkstück anfasen kann. Dazu wird die Jordankurve entsprechend gewählt.

Für dieses Beispiel kann man sich vorstellen den Anfang der Fase so zu wählen, dass eine gleich hohe Fase über die gesamte Flankenbreite entsteht. Eine solche Kurve könnte man als Verschiebung der nicht ebenen Stirnseite um einen definierten Betrag nach unten wählen. Es ist aber auch möglich, die Kurve in der Art, wie sie in Fig. 11 dargestellt ist, vorzugeben. Weiterhin kann die Breite der Fase auch so gewählt werden, dass sich zunächst nach der Anfasbearbeitung eine sich über die Zahnlücke verändernde Breite ergibt, welche jedoch im Hinblick auf den Abtrag bei Folgeprozessen so ausgelegt ist, dass sich am fertigen Werkstücke eine gleich hohe Fase über die gesamte Zahnlücke ergibt.

Für den allgemeinen Fall müssen die Relationen, die aus der Bedingung hervorgehen, dass der Fräser auf beiden Kurven tangential anliegen muss, gelöst werden. Das bedeutet, dass drei der genannten Parameter ($\omega$, $\gamma$, $y_T$, $d$, $z_T$) vorgegeben werden können.

Die Relationen sind wie folgt aufgebaut: Drei Gleichungen für die Punktgleichheit und eine Gleichung für das tangentiale Anliegen. Das ergibt, dass vier freie Variablen nötig sind, um das Gleichungssystem, bestehend aus den vier Gleichungen, zu lösen. Dies sind für die erste Berührung die zwei Variablen, die die Oberfläche des Fräsers parametrisieren, der Drehwinkel des Werkzeugs $\varphi_W$, und ein weiterer Parameter, z.B. die Fräserhöhe $z_T$. Diese Relationen können beispielsweise für eine diskrete Anzahl von Punkte auf der Kurve formuliert und gelöst werden. Somit erhält man die gesuchten Parameter als Funktion der Position des Punkts auf der Fase.

Falls nun eine weitere Jordankurve gegeben ist, kommen weitere vier Gleichungen als Bedingungen zu dem vorigen Gleichungssystem hinzu. Das heißt, dass nun ein Gleichungssystem aus 8 Gleichungen gelöst werden muss. Dazu stehen in diesem Falle zwei Variablen der Parametrisierung der Fräseroberfläche (pro Berührpunkt, also insgesamt 4), die Parametrisierung der zweiten Kurve, der Drehwinkel des Werkstücks $\varphi_W$, und zwei weitere Parameter, z.B. die Fräserhöhe $z_T$ und der Achskreuzwinkel $\gamma$ zur Verfügung.

Man kann nun die Fase sehr frei vorgeben. Insbesondere kann der Fasenwinkel entlang der Lückenkontur vorgegeben werden. Der Fräser ist dabei universell einsetzbar, da die Fasenform durch die Bearbeitungskinematik erzeugt wird. Eine Limitierung der Fasenform ergibt sich im Wesentlichen nur durch den Durchmesser des Fräsers, da, wenn dieser im Vergleich zur Verzahnung zu groß gewählt wurde, Kollisionen insbesondere im Zahnfuß entstehen, die vermieden werden müssen.

Als Spezialfall des allgemeinen Falles kann man eine glatte Jordankurve vorgeben und durch die Wahl der Parameter $\omega$, $\gamma$, $y_T$ und wahlweise der Verschiebung $z_T$ oder des Abstandes d die Fase implizit definieren. Diese Kurve muss ebenfalls nicht in einer Stirnebene liegen. Ein mögliches Beispiel ist in Fig. 11 zu sehen.

In diesem Fall wird nur die Relation, die durch die Bedingung entsteht, dass das Werkzeug die eine Kurve tangential berührt, gelöst.

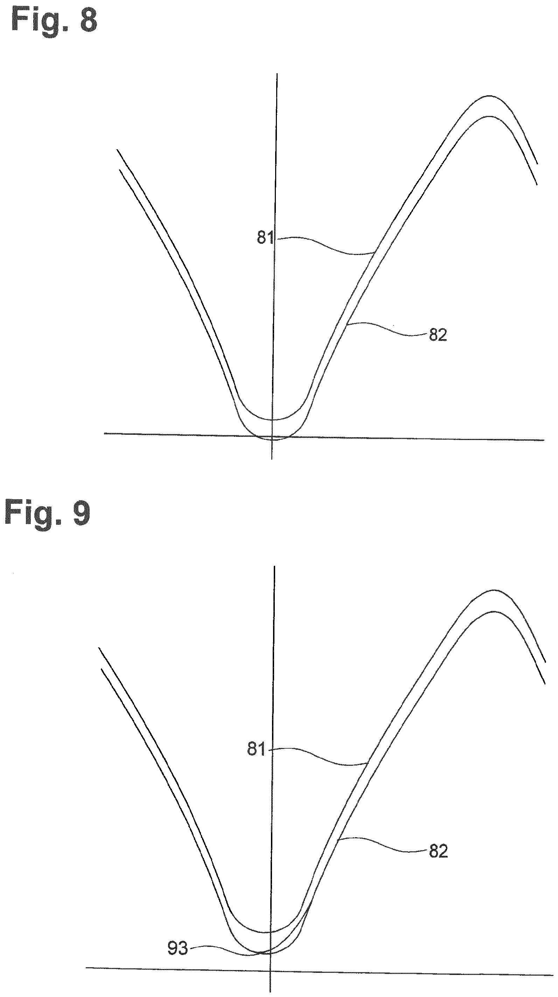

Durch geeignete Wahl der Parameter kann die Fase symmetrisch (siehe Fig. 8) oder auch asymmetrisch (siehe Fig. 10) gewählt werden.

Die so implizit definierte Fase kann mithilfe einer Abtragssimulation aus der zuvor bestimmten Kinematik und dem Werkzeug bestimmt werden. Bei dieser Abtragssimulation wird unter Berücksichtigung der Geometrie des Fräsers und der im Bearbeitungsprozess gefahrenen Bewegungsbahn des Fräsers relativ zur Verzahnung bestimmt, wo Material entfernt wird und ausgehend von der unbearbeiteten Geometrie die Endkontur der Verzahnung und somit auch der Fase bestimmt. Solche Abtragsimulationen sind für diverse Zerspanprozesse bekannt.

Die Erfindung sieht in einer bevorzugten Variante auch vor, dass die Steuerung der Vorrichtung eine Funktion zur Eingabe eines Parameters der gewünschten Fasenform aufweist. Bei diesem Parameter der Fasenform kann es sich dabei beispielsweise um eine Fasenbreite und/oder eine Fasentiefe und/oder einen Fasenwinkel und/oder eine Symmetrieeigenschaft handeln.

Bevorzugt umfasst die Steuerung eine Funktion zur Bestimmung der Fasenform aus einem oder mehreren Parametern der Lückenkontur der Verzahnung, welche angefast werden soll. Im Spezialfall der Evolventenverzahnung wären dies unter anderem der oder die Profilwinkel, der Schrägungswinkel, die Zahndicke und die Form des Zahnfußes sowie ggf. die Form eines Kopfkantenbruchs. Insbesondere kann es sich um einen oder mehrere Parameter handeln, welche in der Steuerung bereits aus der Einreichung des Verzahnungsprozesses, mit welchem die Verzahnung erzeugt wird, vorliegen bzw. welche über eine Funktion zur Einrichtung des Verzahnungsprozesses eingebbar sind.

Bevorzugt wird die Fasenform anhand des eingegebenen Parameters der Fasenform und des einen oder der mehreren Parameter der Lückenkontur bestimmt.

Diese Variante der Erfindung zeichnet sich dadurch aus, dass nur wenige Parameter zusätzlich zur bereits in der Steuerung zur Definition der Verzahnung eingegeben Parameter eingegeben werden müssen, wodurch die Arbeitsvorbereitung vereinfacht wird. Auch ist eine Anbindung an ein externes Computersystem sowie eine Datenübertragung von einem externen Computersystem nicht nötig.

Eine erweiterte Form der Erfindung sieht vor, dass sich die Fasenbreite und/oder die Fasentiefe und/oder der Fasenwinkel über das Profil der Verzahnung gezielt verändern lassen und die Steuerung vorzugsweise eine entsprechende Eingabefunktion vorsieht. So kann es beispielsweise eingebbar sein, dass der Fasenwinkel im Bereich des Kopfes der Verzahnung größer als im Bereich des Fußes der Verzahnung ist.

Die allgemeinste Form der Definition der Fase sieht vor, dass diese digital auf die Steuerung übertragen wird, beispielsweise über ein 2D- oder 3D-Datenformat.

Aus diesen Definitionen der Fase kann die Steuerung die Kinematik bestimmen, welche die Fase am besten annähert oder sogar zumindest theoretisch exakt fertigt. Wie gut die Annäherung ist, wird von der verwendeten Variante der Erfindung abhängen.

Wird die Variante gewählt, in der für die Berechnung zwei Jordankurven berücksichtigt werden, so wird eine sehr gute Annäherung erreicht werden. Wird eine Variante gewählt, bei der nur eine Jordankurve vorgegeben wird, beispielsweise die Varianten bei denen die Parameter $\omega, \gamma, y_T$ gewählt und wahlweise eine Verschiebung $z_T$ oder der Abstandes d bestimmt werden, so wird im Allgemeinen die Fase nur angenähert werden können. Die Erfindung sieht in diesem Fall eine Steuerung vor, welche die Parameter $\omega, \gamma, y_T$ so bestimmt, dass die Fase möglich gut angenähert wird. Diese Bestimmung erfolgt dabei vorzugsweise über eine Ausgleichrechnung, welche die Parameter so bestimmt, dass eine Abstandsfunktion, welche den Abstand der erzielbaren Fase von der gewünschten Fase misst, minimiert. Eine einfache Abstandfunktion wäre hier eine Summe der Abstandquadrate von einer diskreten Anzahl an Punkten der erzielten Kontur 82 zur gewünschten Kurve.

Die Parameter haben dabei im Wesentlichen den folgenden Effekt auf die Fasenform: $\omega$ vergrößert bzw. verkleinert den Fasenwinkel entlang der Zahnkontur, $\gamma$ und $y_T$ vergrößern jeweils den Fasenwinkel auf einer Flanke und verkleinert ihn auf der anderen und verursachen eine Änderung des Fasenwinkels von Kopf bis Fuß, $\varphi_W$ vergrößert die Fasenbreite auf einer Flanke und verkleinert sie auf der anderen. All diese Effekte werden jedoch automatisch von der Ausgleichsrechnung berücksichtigt.

Die Steuerung hat vorzugsweise eine Anzeigefunktion, welche die gewünschte Fasenform sowie die theoretisch erzielbare Fasenform graphisch darstellt, um so einen optischen Vergleich der beiden Fasenformen zu ermöglichen, und/oder eine Anzeigefunktion zur Darstellung der Abweichung zwischen der gewünschten Fasenform sowie der theoretisch erzielbaren Fasenform.

In dem Spezialfall, dass $\omega, \gamma,$ und $d$ vorgegeben werden, kann man ein optimales $y_T$ bestimmen, dies fest einstellen und nur noch die Fräserhöhe $z_T$ verfahren, sodass die resultierende Fase symmetrisch ist (siehe Fig. 8). Wenn man $y_T$ nicht optimal wählt, dann wird die resultierende Fase asymmetrisch (siehe Fig. 10).

Um das optimale $y_T$ für gegebene Parameter zu bestimmen, kann man mehrere Simulationen mit verschiedenen angenommenen $y_T$-Werten durchführen und die simulierte Fase automatisiert bezüglich der gewünschten Eigenschaft (z.B. Symmetrie) auszuwerten. Dadurch erhält man automatisiert geeignete Parameter um die gewünschte Fase zu erzeugen.

Betrachtet man den bereits eingeführten Spezialfall, dass nur eine Kurve, hier die Profillinie, an der die Fase ansetzt, gegeben ist, und berechnet nur die Fräserverschiebung in Richtung der Rotationsachse des Werkstücks, d.h. man gibt sowohl den Anstellwinkel $\omega$, den Achskreuzwinkel $\gamma$ als auch die beiden Verschiebungen $d$ und $y_T$ vor, dann erhält man eine Kinematik, die die Kopplung zwischen der Rotation des Werkstücks $\varphi_W$ und der Fräserhöhe $z_T$ beschreibt. Für verschiedene Parameter sind diese in Fig. 5 und Fig. 7 dargestellt.

Das Werkzeug ist bevorzugt so zu verfahren, dass das zerspante Volumen zu jeder Zeit in etwa gleich groß ist. Dies beugt Überlastung des Fräsers vor und fördert eine längere Standzeit von diesem.

Aus diesem Grunde wird der Fräser entlang der Kurve, die die Profillinie parametrisiert mit konstantem Vorschub verfahren. Die Strecke, die sich als abgefahrene Kurve ergibt, wird hier als Fräsfortschritt $\sigma$ bezeichnet.

Wenn man sich den Drehwinkel aus der berechneten Kinematik gegen den Fräsfortschritt aufträgt, erkennt man, dass die explizite Berechnung des Winkels nötig ist, da kein linearer Zusammenhang zwischen Fräsfortschritt und Drehwinkel des Werkstücks vorliegt (siehe Fig. 4 und Fig. 6). Somit kann man keine einheitliche Drehgeschwindigkeit für das Werkstück während der Bearbeitung verwenden. Es kann sogar so sein, dass das Werkstück während der Bearbeitung zurückdrehen muss, um die Kinematik zu erfüllen (siehe Fig. 6).

Wie aus Fig. 4a und 6a ersichtlich, ist die Drehgeschwindigkeit und die Drehbeschleunigung im Bereich der Zahnköpfe am größten. Weiterhin werden die beiden Flanken mit einer unterschiedlichen Drehgeschwindigkeit bearbeitet. Im Bereich des Zahnfußes wird eine entsprechende Änderung der Drehgeschwindigkeit von der einen zur anderen Flanke vorgenommen, so dass sich hier eine größere Drehbeschleunigung ergibt als auf den Flanken. Innerhalb einer oder beiden Flanken kann die Drehgeschwindigkeit ebenfalls variieren.

Dabei stehen die Abkürzungen in Fig. 4, 4a, 6 und 6a für:

A = Adendum Zahnkopf
D = Dedendum Zahnfuss
1.Fl = erste Flanke
2.Fl = zweite Flanke

Ein weiterer Spezialfall des allgemeinen Falles wäre, dass man sich wie im ersten Spezialfall eine glatte Jordankurve auf der Fase (z.B. den Anfang der Fase) vorgibt, diesmal aber die Parameter $z_T$, $\omega$, $\gamma$ und $y_T$ fest einstellt und nur die Kinematik berechnet, wie d verfahren werden muss, um die Fase zu fertigen. Der Vorteil dieses Verfahrens ist, dass auch Fasen an Stellen angebracht werden können, die nur wenig Platz in z-Richtung erlauben. Dieses Verfahren ist auch bevorzugt auf diese problematischen Verhältnisse anzuwenden, da dadurch, im Gegensatz zum ersten Spezialfall, der Fräser nur in einem Bereich belastet würde.

Ein weiterer Spezialfall ist die Kombination aus den beiden vorigen Spezialfällen. Es wird weder $z_T$ noch $d$ fixiert. Dazu wird wie auch in den vorigen Spezialfällen eine glatte Jordankurve auf der Fase (z.B. der Anfang der Fase) vorgegeben, die Parameter $\omega$, $\gamma$ und $y_T$ fest eingestellt, nun müssen aber fünf anstelle von nur vier Variablen zur Lösung des Gleichungssystems genutzt werden. Das bedeutet, dass ein unterbestimmtes Gleichungssystem gelöst werden muss. Deswegen ist es hier notwendig, eine zusätzliche Bedingung anzugeben (dies könnte eine genaue Position des Berührpunktes auf dem Fräser sein) oder eine Ausgleichsrechnung durchzuführen, wobei hier die Fräserbelastung über den gesamten Fräser verteilt werden kann. Da dadurch ein größerer Bereich des Fräsers genutzt wird, führt dies zu einer längeren Fräserstandzeit.

Bei einer Ausgleichsrechnung können auch zusätzliche Bedingungen eingeführt werden. Dies resultiert dann in einem nichtlinearen Optimierungsproblem.

Diese zusätzlichen Bedingungen könnten Anforderungen technischer Natur sein, dass eine gewisse Fräserhöhe nicht überschritten werden darf oder dass es keine Kollisionen mit einer anderen Verzahnung oder einem Bund geben darf. So kann man z.B. die Verschiebung $d$ so bestimmen, dass der Fräser nur ein fest definiertes Stück über den Fußkreisradius übersteht. Es kann aber auch sein, dass man die Höhe des Fräsers aufgrund eines Bundes restringieren muss. Dafür kann die Verschiebung $z_T$ so gewählt werden, dass im kritischen Bereich keine Kollision mit dem Bund stattfindet, aber im unkritischen Bereich der Verschleiß möglichst über die gesamte Fräserlänge verteilt wird. Deswegen wird man im kritischen Bereich vor allem d verfahren, aber im unkritischen Bereich dann d konstant lassen und $z_T$ verfahren.

Dieses Verfahren ist besonders interessant in Hinblick auf Verzahnungen mit einer großen Verzahnungshöhe. Für diese stehen keine ausreichend großen Fingerfräser zur Verfügung, sodass man nicht den ersten Spezialfall, dass nur die Fräserhöhe $z_T$ verfahren wird, anwenden kann. Der zweite Spezialfall, dass nur die Zustellung d verfahren wird, resultiert in einem sehr ungleichmäßigen Werkzeugverschleiß. Aus diesem Grund wird die Kombination aus den beiden Spezialfällen gewählt, dass sowohl d verfahren wird, damit die ganze Verzahnung angefast werden kann, und dass $z_T$ ebenfalls verfahren wird, damit sich der Verschleiß gleichmäßig über das Werkzeug verteilt.

Ein weiterer Spezialfall ist das Anfasen von Innenverzahnungen. Für diese ist es nötig, in besonderen Fällen über die Tischmitte zu arbeiten. Dies kann notwendig werden, wenn die Verzahnung an einem Ende nicht unmittelbar erreichbar ist.

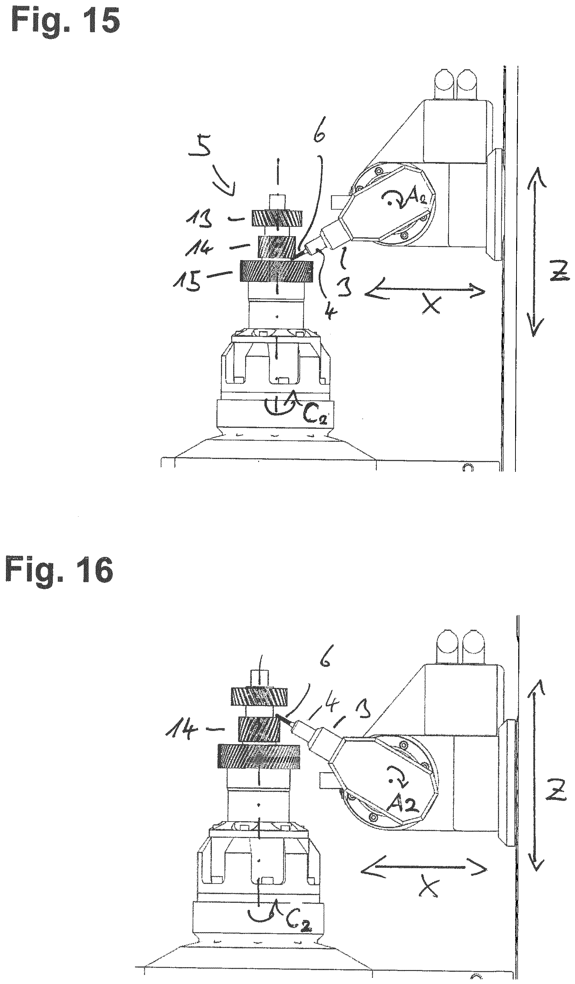

Dann verfährt man den Fräser gemäß den bereits beschriebenen Fällen, sowohl der Spezialfälle, als auch des allgemeinen Falls, aber im Inneren des Rades. Eine Darstellung dieses Verfahrens ist in Fig. 16 bis 20 zu sehen.

Ist der Fräserdurchmesser größer als der Fußkreisradius der Verzahnung, treten bei der Bearbeitung natürlicherweise Kollisionen auf. Diese kann man wie in Fig. 3 visualisieren.

Dort sind die Schnitte des konischen bzw. zylindrischen Fräsers mit der Stirnschnittebene auf Höhe der Profillinie, an der die Fase ansetzt, als Ellipsen dargestellt.

Die Ellipsen an der rechten und linken Flanke teilen nur je einen Berührpunkt mit der Profillinie, wohingegen die fett gezeichneten Ellipsen mehrere Schnittpunkte mit der Profillinie teilen. Dies bedeutet, dass, vorausgesetzt man verfahre den Fräser entlang der Profillinie, das Werkzeug nicht nur eine Fase anbringt, sondern die Flanke bzw. den Zahnfuß schädigt (gekennzeichnete Ellipsen in Fig. 3).

Dies muss man korrigieren, indem man die Positionen, die zu Kollision führen, nicht mit dem Fräser anfährt. Dadurch verändert sich die Fase und man erhält die mittlere Linie in Fig. 9, die sich als Hüllfläche der Ellipsen, die nur genau einen Berührpunkt mit der Profillinie teilen, ergibt.

Optional kann man auch durch Verwendung eines Kugelfräsers, dessen Durchmesser kleiner ist als der Durchmesser der Fußrundung, diesen Kollisionen vorbeugen.

Wenn man nach dem hier beschriebenen Verfahren eine Fase an dem Werkstück erzeugt, dann besteht die Möglichkeit, die Fase zu korrigieren. Korrekturen werden nötig, wenn die exakte Maschinengeometrie eventuell nicht bekannt ist oder wenn die Verzahnung eventuell manuell eingemittet wird.

Eine mögliche Korrektur wäre die gewünschte Verschiebung einer Fase in axialer Richtung. Das heißt, dass eine gewünschte Korrektur den $y_T$-Wert betrifft. Um die nötige Veränderung von diesem zu berechnen, kann man wie auch bei der Berechnung eines optimalen $y_T$-Wertes mehrere Simulationen mit verschiedenen Parametern durchführen. Durch diese Variation lässt sich der Parameter $y_T$ so bestimmen, dass die gewünschte Fase erzeugt wird.

Dieses Prinzip kann man auch für die restlichen Parameter $\omega$, $\gamma$, und $d$ anwenden. So können für alle diese Parameter die Einflüsse auf die Fasenform, insbesondere die Symmetrie der Fase, die axiale Lage der Fase, den Fasenwinkel sowie der Verlauf des Fasenwinkel über die gesamte Lücke bestimmt werden. Sind die Einflüsse bekannt, so können die Parameter so bestimmt werden, dass die gewünschte Fasenform erzielt wird.

Insbesondere an großen Bauteilen kann man zunächst eine erste Fase, die noch nicht die gewünschte Tiefe bzw. Höhe hat, fräsen und diese dann vermessen. Dadurch machen sich dann nötige Korrekturen bemerkbar, die man nach dem gerade eben beschriebenen Verfahren berechnen kann. Diese können dann mitberücksichtigt werden, wenn der Rest der Fase, d.h. die Fase auf volle Tiefe bzw. Höhe gefräst wird. Somit lässt sich Ausschuss vermeiden.

Die hier beschriebenen Korrekturen können nötig sein, wenn beispielsweise die Geometrie des Fingerfräsers nicht exakt der in der Berechnung angenommen entspricht. Dies kann beispielsweise durch nicht exakte Vermessung des Fingerfräsers und/oder durch Verschleiß verursacht sein.

Die hier beschriebenen Korrekturen können alternativ oder zusätzlich auch nötig sein, wenn beispielsweise die Relativstellung des Fingerfräsers zur Verzahnung nicht exakt der in der Berechnung angenommen entspricht. Dies kann beispielsweise durch nicht exakte Vermessung der Vorrichtung und/oder durch nicht oder unzureichend kompensierten Wärmegang der Vorrichtung und/oder durch ein unpräzises Einmitten des Fingerfräsers in die Verzahnung verursacht sein.

Die benötigten Korrekturen können dabei beispielsweise über die Steuerung eingegeben werden, digital auf die Maschine übertragen werden oder aus einer Vermessung der erzielten Fase und einem anschließenden Soll-Ist-Vergleich bestimmt werden. Die Messung kann dabei sowohl in der Vorrichtung stattfinden als auch auf einer externen Messmaschine. Die Vermessung in der Maschine bietet den Vorteil, dass das Einstellen des Prozesses und ermitteln der Korrekturen vollautomatisch erfolgen kann, wenn die gemessenen Werte direkt in die Steuerung übertragen werden.

Die Variante der Erfindung, die nicht das Verfahren aller zur Verfügung stehenden Achsen während der Anfasbearbeitung vorsieht, hat den Vorteil, gegenüber einer Variante, bei der alle Achsen verfahren werden, dass nicht alle Achsen als NC-Achsen ausgeführt sein müssen oder zumindest nicht dafür geeignet sein müssen, während der Anfasbearbeitung verfahren zu werden. Dadurch kann eine Vorrichtung preisgünstiger gestaltet werden.

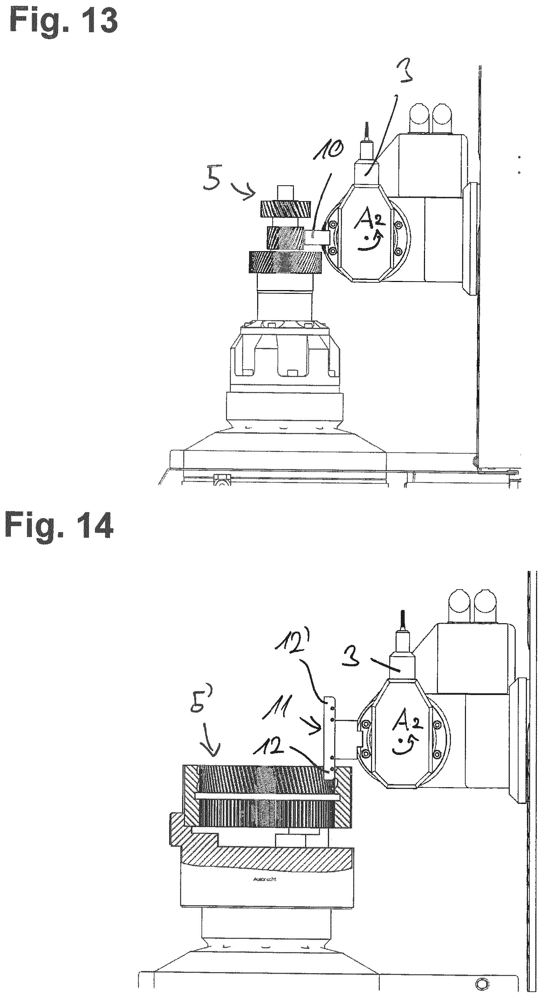

Im Folgenden wird die vorliegende Erfindung noch einmal anhand des Ausführungsbeispiels in Fig. 1a und 1b sowie dem in Figuren 13 bis 20 dargestellten Bearbeitungssituationen dargestellt. Dabei können alle Aspekte, welche bisher beschrieben wurden, mit der folgenden Darstellung kombiniert werden, und umgekehrt.

Fig. 1a und 1b zeigen ein mögliches Ausführungsbeispiel einer erfindungsgemäßen Vorrichtung zur Anfasbearbeitung eines verzahnten Werkstückes 5. Die Vorrichtung weist eine Werkstückspindel 1 mit einer um eine Drehachse C2 drehbar gelagerten Werkstückaufnahme 2 zur Aufnahme des Werkstückes 5 auf. Weiterhin weist die Vorrichtung eine Werkzeugspindel 3 mit einer auf einer Drehachse B3 drehbar gelagerten Werkzeugaufnahme 4 zur Aufnahme eines Fingerfräsers 6 auf.

Die Werkstückspindel 1 ist auf einem Maschinenbett 7 angeordnet, welches mit einem Maschinenständer oder Maschinenrahmen 8 in Verbindung steht, an welchem ein Bearbeitungskopf 9 angeordnet ist, welcher die Werkzeugspindel 3 trägt. Der Bearbeitungskopf 9 und/oder die am Bearbeitungskopf 9 angeordnete Werkzeugspindel 3 sind über mehrere Maschinenachsen relativ zur Werkstückspindel 1 verfahrbar.

Die Achskonfiguation ist im Ausführungsbeispiel wie folgt gewählt:
Der Bearbeitungskopf ist über eine erste Linearachse X in einer Richtung senkrecht zur Drehachse C2 der Werkstückaufnahme 2 verfahrbar. Hierdurch kann der Fingerfräser in einer Ebene senkrecht zur Drehachse der Werkstückspindel an das Werkstück herangefahren werden.

Weiterhin ist der Bearbeitungskopf über eine zweite Linearachse Z in einer Richtung parallel zur Drehachse C2 der Werkstückaufnahme 2 verfahrbar. Hierdurch kann der Fingerfräser in axialer Richtung relativ zu dem Werkstück 5 verfahren werden.

Im Ausführungsbeispiel ist weiterhin eine erste Schwenkachse A vorgesehen, welche parallel zur ersten Linearachse X verläuft und ein Verschwenken des Bearbeitungskopfes 9 erlaubt.

Weiterhin ist eine dritte Linearachse Y vorgesehen, welche ein Verfahren des Bearbeitungskopfes in einer Richtung senkrecht zur ersten Linearachse X und zur zweiten Linearachse Z erlaubt. Alternativ zu einer solchen dritten Linearachse Y könnte auch eine dritte Linearachse V eingesetzt werden, welche zwischen dem Bearbeitungskopf und der ersten Schwenkachse A angeordnet ist, und daher über die erste Schwenkachse A verschwenkt werden kann. Die dritte Linearachse Y bzw. V erlauben ein Verfahren des Fingerfräsers 6 gegenüber einer Ebene, welche durch die Drehachse C2 der Werkstückaufnahme parallel zur X-Achse verläuft, und damit eine seitliche Bewegung gegenüber der Mitte des Werkstückes 5.

Weiterhin ist eine zweite Schwenkachse A2 vorgesehen, über welche die Werkzeugspindel 3 schwenkbar am Bearbeitungskopf 9 angeordnet ist. Die zweite Schwenkachse A2 verläuft senkrecht zur ersten Schwenkachse A und schneidet diese bevorzugt. Durch die zweite Schenkachse A2 kann der Anstellwinkel des Fingerfräsers 6 relativ zur Verzahnung des Werkstücks eingestellt werden.

Die zweite Schwenkachse A2 erlaubt es, den Winkel des Fingerfräsers 6 relativ zur Drehachse C2 der Werkstückaufnahme und damit der Fasenwinkel für eine Bearbeitung einzustellen. Die zweite Schwenkachse A2 erlaubt es zudem, den Fingerfräser aus einer ersten Schwenkstellung, wie sie in Fig. 15 gezeigt ist, und welche zur Bearbeitung einer unteren Kante dient, in eine zweite Schwenkstellung, wie sie in Fig. 16 gezeigt ist, und welche zur Bearbeitung einer oberen Kante dient, zu Verschwenken. Bevorzugt kann der Fingerfräser weiterhin in eine Neutralstellung verschwenkt werden, wie sie in Fig. 13 und 14 gezeigt ist, und in welcher der Fingerfräser vom Werkstück weggeschwenkt wurde.

Bei der Drehachse D1 der Werkstückaufnahme 2, der ersten Linearachse X und der zweiten Linearachse Z handelt es sich jeweils um NC-Achsen. Ebenso handelt es sich bei der dritten Linearachse Y bzw. V sowie bei der ersten Schwenkachse A um NC-Achsen.

Die Drehachse B3 der Werkzeugaufnahme 4 muss dagegen nicht als NC-Achse ausgeführt werden, da sie lediglich dem nicht synchronisierten Antrieb des Fingerfräsers 6 dient.

Die zweite Schwenkachse A2 kann in einem ersten Ausführungsbeispiel als eine Stellachse ausgeführt sein. Die Stellungen der Schwenkachse A2 können in diese Fall beispielsweise manuell oder über Anschläge definiert werden.

In einer alternativen Ausgestaltung kann auch die zweite Schwenkachse A2 als eine NC-Achse ausgeführt sein. Dies erlaubt es zum einen, die oben genannten Stellungen zur Bearbeitung unterschiedlicher Kanten flexibel anzufahren, den Anstellwinkel des Fräsers bei der Anfasbearbeitung flexibel einzustellen, und Anstellwinkel gegebenenfalls auch über die Zahnlücke zu variieren.

An dem Bearbeitungskopf 9 sind weiterhin Einfädelsensoren 10 und 11 angeordnet. Der Einfädelsensor 10 dient der Vermessung von Außenverzahnungen, der Einfädelsensor 11 der Vermessung von Innenverzahnungen. Üblicherweise wird ein Bearbeitungskopf dabei nur einen der beiden Sensoren aufweisen. Als Einfädelsensor wird bevorzugt ein berührungsloser Sensor, insbesondere ein induktiver Sensor eingesetzt.

In Fig. 13 ist das Einmessen eines Werkstückes 5 mit einer Außenverzahnung durch den Einfädelsensor 10 gezeigt. Hierfür wird die Werkzeugspindel 3 über die zweite Schwenkachse A2 in eine Neutralstellung verschwenkt. Der Einfädelsensor 10 wird an die Verzahnung herangefahren, und das Werkstück über die Drehachse C2 gedreht. Der Einfädelsensor erfasst bei der Drehbewegung die Position der Zähne bzw. Zahnnuten. Durch die Erfassung der Position der Zähne bzw. Zahnnuten kann dann bei der darauffolgenden Anfasbearbeitung der Fingerfräser in der richtigen Position relativ zur Zahnlücke positioniert werden.

Fig. 14 zeigt die Vermessung eines Werkstückes 5' mit Innenverzahnung. Der Einfädelsensor weist hierzu einen Sensorarm 12 auf, welcher in die Innenverzahnung hinein reicht. Im Ausführungsbeispiel sind dabei zwei in entgegengesetzte Richtungen ausgerichtete Sensorarme 12 und 12' vorgesehen, um eine Vermessung von Innenverzahnungen sowohl von oben, als auch von unten zu ermöglichen.

Die Anfasbearbeitung des bereits in Fig. 1a, 1b und 13 gezeigten Werkstücks 5 mit einer Außenverzahnung durch die erfindungsgemäße Vorrichtung ist in Fig. 15 und 16 gezeigt. Das Werkstück 5 weist mehrere Verzahnungen 13, 14 und 15 auf. Besonders problematisch ist die Anfasbearbeitung der mittleren Verzahnung 14, da die beiden äußeren Verzahnungen 13 und 15 Störkonturen bilden, welche bei der Anfasbearbeitung berücksichtigt werden müssen.

Der Fingerfräser 6 wird daher jeweils so positioniert, dass er ausgehend von der Werkzeugaufnahme 4 durch die Zahnlücke hindurch zu dem Kontaktpunkt mit der jeweils zu bearbeitenden Kante der Verzahnung verläuft. Daher steht lediglich die Spitze des Fingerfräsers 6 über die jeweilige Stirnseite der zu bearbeitenden Verzahnung hervor. Hierdurch können auch Verzahnungen wie die innere Verzahnung 14 mit sehr nah an der jeweiligen Stirnkante angeordneten Störkanten anfasbearbeitet werden.

Fig. 15 zeigt die Anfasbearbeitung einer unteren Kante der mittleren Verzahnung des Werkstückes 5. Die Werkzeugspindel mit dem Fingerfräser 6 wurde hierfür über die zweite Schwenkachse A2 in eine untere Bearbeitungsstellung verschwenkt. Der Winkel der Fase wird über die Schwenkstellung der Werkzeugspindel 3 mittels der zweiten Schwenkachse A2 eingestellt.

Da neben der unteren Kante der mittleren Verzahnung 14 nur sehr wenig Platz vorhanden ist, wird zur Bearbeitung der unteren Kante bevorzugt ausschließlich oder fast ausschließlich die erste Linearachse X eingesetzt, um den Fingerfräser an der Zahnkante gesteuert entlang zu verfahren, und auf eine Verfahrbewegung über die zweite Linearachse Z dagegen komplett oder größtenteils verzichtet. Hierdurch kann die gesamte Zahnkante über einen vorderen Bereich des Fingerfräsers 6 anfasbearbeitet werden, so dass der Fingerfräser mit seiner Spitze nur geringfügig über die entsprechende untere Stirnkante der mittleren Verzahnung 14 herausschaut. Dieses Vorgehen ist jedoch mit dem Nachteil verbunden, dass nicht die gesamte Länge des Fingerfräsers zur Verzahnbearbeitung genutzt wird, so dass sich der Verschleiß im vorderen Bereich des Fingerfräser konzentriert.

Fig. 16 zeigt die Anfasbearbeitung einer oberen Kante der mittleren Verzahnung 14. Hierfür wurde die Werkzeugspindel mit dem Fingerfräser 6 über die zweite Schwenkachse A2 in eine obere Bearbeitungsstellung verschwenkt, in welcher der Fingerfräser 6 auf der oberen Kante aufliegt. Auch hier kann der Fasenwinkel über die zweite Schwenkachse A2 eingestellt werden.

Da oberhalb der oberen Kante mehr Raum zur Verfügung steht, wird der Fingerfräser 6 ausschließlich oder überwiegend über die zweite Linearachse Z entlang der Zahnkante verfahren. Dies hat den Vorteil, dass unterschiedliche axiale Bereiche der Mantelfläche des Fingerfräsers zur Anfasbearbeitung eingesetzt werden, so dass der Verschleiß gleichmäßig über den Fingerfräser verteilt werden kann. Auf eine Verfahrbewegung über die X-Achse kann entweder komplett verzichtet werden, oder es können sowohl die erste Linearachse X als auch die zweite Linearachse Z zur Erzeugung der Verfahrbewegung herangezogen werden.

In einer möglichen Ausgestaltung der vorliegenden Erfindung wird zur Bearbeitung der Zahnfüße überwiegend die erste Linearachse X, und zur Bearbeitung der Zahnflanken überwiegend die zweite Linearachse Z herangezogen. Hierdurch wird berücksichtigt, dass in Bereich der Zahnfüße aufgrund der Nähe zur Welle des Werkstücks eine zusätzliche Störkontur besteht. Bei Bearbeitung der Zahnflanken ist die Entfernung zu der Welle dagegen größer, so dass hier überwiegend mit der zweiten Linearachse Z gearbeitet werden kann.

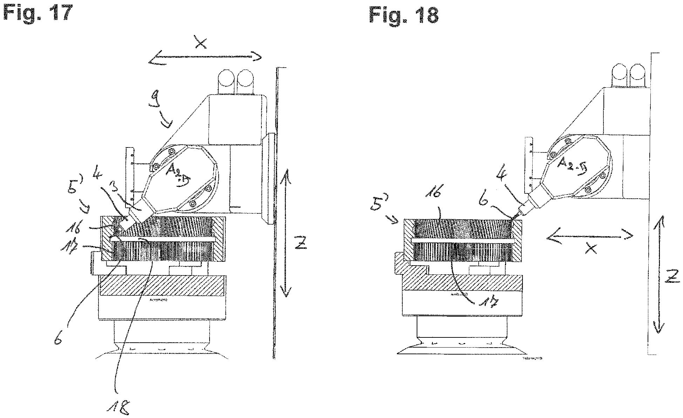

Fig. 17 bis 20 zeigen die Anfasbearbeitung eines Werkstückes mit Innenverzahnung. Auch hier weist das Werkstück 5' mehrere Verzahnungen 16 und 17 auf. Zwischen der oberen Innenverzahnung 16 und der unteren Innenverzahnung 17 ist ein Bund 18 vorgesehen. Besonders problematisch ist aufgrund der schlechten Zugänglichkeit und der Störkonturen die Anfasbearbeitung der jeweils innenliegenden Kanten der oberen Verzahnung 16 und der unteren Verzahnung 17.

Fig. 17 zeigt die Anfasbearbeitung der unteren Kante der oberen Innenverzahnung 16. Hierfür wurde der Bearbeitungskopf 9 mit der Werkzeugspindel 4 mittels der ersten Linearachse X in eine Position über der Verzahnung verfahren. Der Fingerfräser 6 verläuft daher von schräg oben in die Verzahnung hinein und liegt auf der unteren Kante der Innenverzahnung 16 auf.

Bei der Verzahnbearbeitung befindet sich der Fingerfräser mit der Werkstückspindel 4 in der unteren Bearbeitungsstellung, welche über die zweite Schwenkachse A2 angefahren wurde. Die zweite Linearachse Z wird genutzt, um den Fingerfräser in axialer Richtung in die Innenverzahnung hinein zu verfahren.

Aufgrund der engen Störkonturen erfolgt die Verfahrbewegung des Fingerfräsers entlang der Kontur der Kante bei der Anfasbearbeitung bevorzugt hauptsächlich oder ausschließlich über die erste Linearachse X.

Fig. 18 zeigt die Anfasbearbeitung einer oberen Kante der oberen Verzahnung 16. Hier verläuft der Fingerfräser 6 ausgehend von der Werkzeugaufnahme 4 von der Stirnseite der Verzahnung in die Verzahnung hinein, so dass die Spitze des Fingerfräsers innerhalb der Verzahnung angeordnet ist. Da hier keine Störkonturen zu berücksichtigen sind, kann der Fingerfräser 6 während er Anfasbearbeitung ausschließlich oder überwiegend über die zweite Linearachse Z entlang der Kontur der Zahnkante verfahren werden.

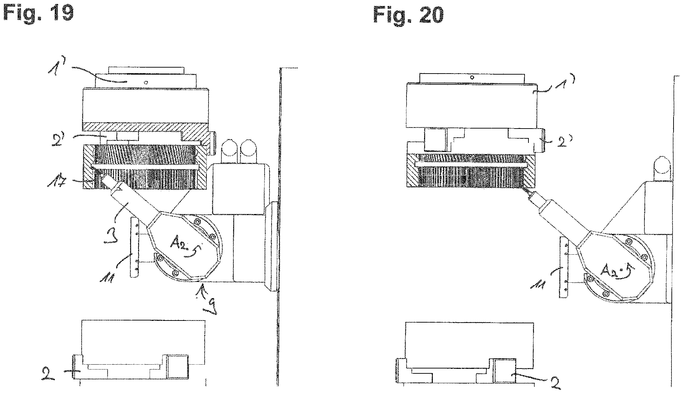

Fig. 19 und 20 zeigen die Anfasbearbeitung der unteren Verzahnung 17 des innenverzahnten Werkstückes 5'. Da zumindest die obere Kante der unteren Verzahnung 17 nicht von der Oberseite der Verzahnung aus bearbeitet werden kann, ist eine zweite Werkstückspindel 1' mit einer entsprechenden zweiten Werkstückaufnahme 2' vorgesehen.

Die beiden Werkstückspindeln sind koaxial angeordnet und können in axialer Richtung aufeinander zubewegt werden, so dass ein in der ersten Werkstückaufnahme 2 aufgenommenes Werkstück über Greifbacken der zweiten Werkstückaufnahme 2' gegriffen werden kann. Die erste Werkstückaufnahme 2 gibt daraufhin das Werkstück frei, so dass dieses nunmehr in der zweiten Werkstückaufnahme 2' aufgenommen ist. Die zweite Werkstückaufnahme 2' ist dabei so angeordnet oder so anordenbar, dass der Bearbeitungskopf 9 mit der Werkzeugspindel 3 unter das Werkstück 5' verfahren werden kann.

Zur Übergabe des Werkstücks 5' von der ersten Werkstückaufnahme 2 zur zweiten Werkstückaufnahme 2' ist mindestens eine der beiden Werkstückaufnahmen in Richtung der Drehachse D1 axial verfahrbar.

In Fig. 19 wurde zur Bearbeitung der oberen und damit inneren Kante der unteren Verzahnung 17 der Fingerfräser 6 wiederum über die erste Linearachse X über die Mitte der Verzahnung verfahren. Der Fingerfräser erstreckt sich hierbei ausgehend von der Werkzeugaufnahme 4 durch die Verzahnung hindurch zu der zu bearbeitenden Kante. Die Verzahnbearbeitung erfolgt analog zu der in Fig. 17 dargestellten Situation.

In Fig. 20 wird die untere und damit äußere Zahnkante der unteren Verzahnung 17 anfasbearbeitet. Hier erfolgt die Bearbeitung analog zu der Anfasbearbeitung in Fig. 18.

Je nachdem, wie der Übergabeprozess des Werkstückes von der ersten zur zweiten Werkstückspindel erfolgt, kann auf ein erneutes Einmessen der Verzahnung zum Einfädeln des Fingerfräsers verzichtet werden, oder es muss ein erneutes Einmessen des in der zweiten Werkstückaufnahme 2' aufgenommenen Werkstücks erfolgen. Hierfür kann der obere Arm des Einfädelsensors 11 in gleicher Weise genutzt werden, wie dies in Fig. 14 für den unteren Arm dargestellt ist, bloß dass nunmehr der Einfädelsensor von unten in die Verzahnung eingreift.

Unabhängig von den bisher beschriebenen Details des Bearbeitungsverfahrens wird gemäß dem ersten Aspekt der vorliegenden Erfindung die Drehgeschwindigkeit des Werkstückes 5 um die Drehachse C2 während der Anfasbearbeitung variiert. Insbesondere erfolgt die Drehung des Werkstücks dabei mit einer über die Zahnlücke variierenden Geschwindigkeit.

Bevorzugt wird zumindest bei der Anfasbearbeitung einer Zahnflanke mit einer geringeren Drehgeschwindigkeit gearbeitet als bei der Anfasbearbeitung eines Zahnfußes und/oder Zahnkopfes. Hierdurch kann das Schnittvolumen pro Zeiteinheit beeinflusst und bevorzugt möglichst konstant gehalten werden.

Eine solche Variation der Drehgeschwindigkeit der Werkstücks hat auch unabhängig von der Führung des Fingerfräsers über NC-Achsen der Verzahnmaschine ent-lang der Kontur der Kante Vorteile, und könnte daher beispielsweise auch bei einer Verfahrensführung zum Einsatz kommen, welche dem aus dem Stand der Technik bekannten Gratomat-Verfahren entspricht, d.h. bei welcher der Fingerfräser federbelastet auf der Zahnkante aufliegt. Besondere Vorteile ergeben sich bei der Variation der Drehgeschwindigkeit jedoch in Kombination mit der kontrollierten Führung des Fingerfräsers über die NC-Achsen der Maschine entlang der Zahnkante, da hierdurch erheblich höhere Bearbeitungsgeschwindigkeiten ermöglicht werden.

Weiterhin kommt insbesondere zur Bearbeitung von Schrägverzahnungen erfindungsgemäß auch die dritte Linearachse Y bzw. V zum Einsatz, um den Fingerfräser 6 relativ zur Zahnlücke zu positionieren. Hierfür wird der Bearbeitungskopf 9 über die Y- bzw. V-Achse aus der Mitte der Verzahnung des Werkstücks heraus verfahren. Die Drehachse B3 der Werkzeugspindel schneidet hierdurch die Drehachse C2 der Werkstückspindel nicht mehr. Weiterhin ist zumindest bei der Verwendung einer Y-Achse der Bearbeitungskopf so angeordnet, dass die A-Achse die Drehachse D1 der Werkstückspindel nicht mehr schneidet, sondern in einem Abstand an dieser vorbei verläuft. Beim Einsatz einer V-Achse schneidet dagegen bevorzugt die Drehachse B3 der Werkzeugspindel 3 die erste Schwenkachse A nicht mehr.

Die Verwendung der dritten Linearachse Y bzw. V zur Positionierung des Fingerfräsers 6 relativ zur Verzahnung ermöglicht es insbesondere bei Schrägverzahnungen, mit weniger Verfahrbewegungen während der Anfasbearbeitung eine symmetrische Fase auf linker und rechter Flanke zu erreichen. Die dritte Linearachse Y bzw. V kann in einer ersten Ausführungsform ausschließlich zur Positionierung des Fingerfräsers in einer festen Position für die Anfasbearbeitung genutzt werden. In einer zweiten Ausführungsform kann die Position entlang der dritten Linearachse dagegen auch während der Anfasbearbeitung, und insbesondere über die Zahnlücke, variiert werden.

Die erste Schwenkachse A und die zweite Schwenkachse A2 können ebenfalls entweder nur zur einmaligen Positionierung des Fingerfräsers relativ zur Zahnkante genutzt werden, oder über die Verzahnbearbeitung zur gesteuerten Führung des Fingerfräsers entlang der Zahnkante genutzt werden. Gegebenenfalls kann auf eine der beiden Schwenkachsen oder sogar beide Schwenkachsen verzichtet werden.

Als Fingerfräser kommt erfindungsgemäß bevorzugt ein Fingerfräser mit einer zylindrischen oder konischen Mantelfläche bzw. Hüllfläche zum Einsatz. Der Konuswinkel beträgt bevorzugt weniger als 20°, insbesondere weniger als 10°. Ein Konus ist dabei von Vorteil, um eine Zahnlücke mit dem geringeren Durchmesser des Fingerfräsers bearbeiten zu können, durch den größeren Durchmesser in den übrigen Bereichen jedoch die Stabilität des Fingerfräsers zu erhöhen.

Bevorzugt wird daher beim Einsatz eines konischen Fingerfräsers der Bereich des Zahnfußes mit einen vorderen Bereich des Fingerfräsers bearbeitet, die Zahnflanken dagegen mit einem weiter hinten am Fingerfräser angeordneten Bereich.

Sämtliche der beschriebenen Vorgehensweisen werden bevorzugt durch eine oder mehrere Bearbeitungsfunktionen der Steuerung der Vorrichtung zur Verfügung gestellt und von dieser automatisiert zur Anfasbearbeitung eines und bevorzugt zur Bearbeitung einer Vielzahl von identischen Werkstücken eingesetzt.

**Patentansprüche**

1. Vorrichtung zur Anfasbearbeitung eines verzahnten Werkstücks (5), mit

   einer Werkstückspindel (1) mit einer um eine Drehachse (C2) drehbar gelagerten Werkstückaufnahme (2) zur Aufnahme des Werkstücks,
   einer Werkzeugspindel (3) mit einer um eine Drehachse (B3) drehbar gelagerten Werkzeugaufnahme (4) zur Aufnahme eines Fingerfräsers (6) wobei die Werkzeugspindel über mindestens eine Linearachse (X) der Vorrichtung relativ zu der Werkstückaufnahme verfahrbar ist, und
   einer Steuerung mit einer Bearbeitungsfunktion, welche zur Anfasbearbeitung eines verzahnten Werkstücks das in der Werkstückaufnahme aufgenommene Werkstück durch Ansteuerung der Werkstückspindel dreht, während ein in der Werkzeugaufnahme aufgenommener Fingerfräser an der zu bearbeitenden Kante angreift,
**dadurch gekennzeichnet,**
**dass** die Bearbeitungsfunktion die Drehgeschwindigkeit des Werkstücks (5) während der Anfasbearbeitung so variiert, dass eine linke Zahnflanke (1.FL) mit einer anderen Drehgeschwindigkeit und/oder Drehbeschleunigung als eine rechte Zahnflanke (2.FL) bearbeitet wird und/oder mit einem Drehgeschwindigkeitsprofil des Werkstücks bearbeitet wird, welches nicht symmetrisch zu dem auf der rechten Zahnflanke eingesetzten Drehgeschwindigkeitsprofil ist.

2. Vorrichtung nach Anspruch 1, wobei die Bearbeitungsfunktion die Drehgeschwindigkeit über eine Zahnlücke variiert, wobei bevorzugt die Bearbeitungsfunktion für jede Zahnlücke das gleiche Geschwindigkeitsprofil der Drehgeschwindigkeit einsetzt, wobei die Bearbeitungsfunktion die Drehgeschwindigkeit über eine Zahnlücke bevorzugt so variiert, dass das Schnittvolumen des Fingerfräsers pro Zeiteinheit und/oder die Relativgeschwindigkeit zwischen der Kante und dem Fingerfräser über die Zahnlücke um nicht mehr als 30 % des Maximalwertes schwankt und/oder wobei die Bearbeitungsfunktion die Drehgeschwindigkeit über eine Zahnlücke so variiert, dass im Bereich des Zahnfußes mit einer größeren Drehbeschleunigung des Werkstückes gearbeitet wird als an mindestens einer und bevorzugt an beiden Zahnflanken.

3. Vorrichtung nach Anspruch 1 oder 2, wobei die Bearbeitungsfunktion die Drehrichtung des Werkstücks beim Durchfahren einer Zahnlücke ändert.

4. Vorrichtung nach einem der vorangegangenen Ansprüche, wobei die Bearbeitungsfunktion zur Anfasbearbeitung eines in der Werkstückaufnahme aufgenommenen verzahnten Werkstücks die Werkzeugspindel über die mindestens eine Linearachse relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird.

5. Vorrichtung nach einem der vorangegangenen Ansprüche, wobei die Werkzeugspindel über eine erste Linearachse X in einer Richtung senkrecht zur Drehachse der Werkstückaufnahme und/oder über eine zweite Linearachse Z parallel zur Drehachse der Werkstückaufnahme verfahrbar ist, wobei bevorzugt die Bearbeitungsfunktion die Werkzeugspindel über die erste Linearachse X und/oder die zweite Linearachse Z so ansteuert, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird, wobei bevorzugt der Fingerfräser zumindest über einen Teilbereich der Zahnlücke durch eine Überlagerung einer Bewegung der ersten Linearachse X und der zweiten Linearachse Z gesteuert entlang der Kontur geführt wird und/oder wobei bevorzugt der Fingerfräser beim Durchfahren einer Zahnlücke sowohl durch eine Bewegung der ersten Linearachse X als auch der zweiten Linearachse Z gesteuert entlang der Kontur geführt wird.

6. Vorrichtung nach einem der vorangegangenen Ansprüche, wobei die Werkzeugspindel über eine erste Linearachse X in einer Richtung senkrecht zur Drehachse der Werkstückaufnahme und über eine zweite Linearachse Z parallel zur Drehachse der Werkstückaufnahme verfahrbar ist, wobei die Bearbeitungsfunktion die Werkzeugspindel über die erste Linearachse X und/oder die zweite Linearachse Z so ansteuert, dass ein in der Werkzeugaufnahme aufgenommener Fingerfräser gesteuert entlang der Kontur einer zu bearbeitenden Kante des Werkstücks geführt wird, wobei die Bearbeitungsfunktion die Werkzeugspindel über die erste Linearachse X und/oder die zweite Linearachse Z so ansteuert, dass unterschiedliche axiale Bereiche der Mantelfläche eines in der Werkzeugaufnahme aufgenommenen Fingerfräsers mit der zu bearbeitenden Kante des Werkstücks in Eingriff kommen und/oder wobei die Werkzeugaufnahme zumindest über Teilbereiche einer Zahnlücke nur über die zweite Linearachse Z oder nur über die erste Linearachse X und nicht über die jeweils andere Linearachse gesteuert entlang der Kontur der zu bearbeitenden Kante geführt wird.

7. Vorrichtung nach einem der vorangegangenen Ansprüche, wobei die Bearbeitungsfunktion zum Einsatz eines Fingerfräsers mit einer zylindrischen Mantelfläche oder einer konischen Mantelfläche mit einem Konuswinkel von weniger als 20°, bevorzugt von weniger als 10° ausgelegt ist, und/oder wobei die Bearbeitungsfunktion mit einer Ausrichtung der Werkzeugaufnahme arbeitet, durch welche ein in der Werkzeugaufnahme aufgenommener Fingerfräser ausgehend von der Werkzeugaufnahme durch die Zahnlücke hindurch zu der Kante der Verzahnung verläuft, welche er bearbeitet.

8. Vorrichtung nach einem der vorangegangenen Ansprüche, wobei die Werkzeugspindel über eine erste Linearachse X in einer Richtung senkrecht zur Drehachse der Werkstückaufnahme und/oder über eine zweite Linearachse Z parallel zur Drehachse der Werkstückaufnahme relativ zur Werkstückaufnahme verfahrbar ist, wobei die Bearbeitungsfunktion zur Anfasbearbeitung eines in der Werkstückaufnahme aufgenommenen verzahnten Werkstücks die Werkzeugspindel über die erste Linearachse X und/oder die zweite Linearachse Z relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird, wobei die Bearbeitungsfunktion bevorzugt zum Einsatz eines Fingerfräsers mit einer zylindrischen Mantelfläche oder einer konischen Mantelfläche mit einem Konuswinkel von weniger als 20°, bevorzugt von weniger als 10°, ausgelegt ist, wobei die Bearbeitungsfunktion die Werkzeugspindel über die erste Linearachse X und/oder die zweite Linearachse Z so ansteuert, dass unterschiedliche axiale Bereiche der Mantelfläche eines in der Werkzeugaufnahme aufgenommener Fingerfräser mit der zu bearbeitenden Kante des Werkstücks in Eingriff kommen, und/oder dass die Bearbeitungsfunktion mit einer Ausrichtung der Werkzeugaufnahme arbeitet, durch welche ein in der Werkzeugaufnahme aufgenommener Fingerfräser ausgehend von der Werkzeugaufnahme durch die Zahnlücke hindurch zu der Kante der Verzahnung verläuft, welche er bearbeitet.

9. Vorrichtung nach einem der vorangegangenen Ansprüche, wobei die Werkzeugspindel beim Durchfahren einer Zahnlücke nicht verschwenkt wird, und/oder wobei die Werkzeugspindel um eine erste Schwenkachse A und/oder A2 verschwenkbar ist, wobei die Bearbeitungsfunktion bevorzugt die Werkzeugspindel über die erste Schwenkachse A und/oder A2 beim Durchfahren einer Zahnlücke verschwenkt, um Variationen des in einer die Zahnflanke senkrecht schneidenden Ebene gemessenen Winkels der Fase über die Zahnlücke zu verringern, und/oder wobei die erste Schwenkachse A bevorzugt senkrecht zu der Drehachse der Werkstückaufnahme und/oder parallel zu der ersten Linearachse X verläuft.

10. Vorrichtung nach einem der vorangegangenen Ansprüche, wobei die Werkzeugspindel über eine erste Linearachse X in einer Richtung senkrecht zur Drehachse der Werkstückaufnahme und über eine zweite Linearachse Z parallel zur Drehachse der Werkstückaufnahme relativ zur Werkstückaufnahme verfahrbar ist, und

   wobei die Bearbeitungsfunktion zur Anfasbearbeitung eines in der Werkstückaufnahme aufgenommenen verzahnten Werkstücks die Werkzeugspindel über die erste Linearachse X und/oder die zweite Linearachse Z relativ zur Werkstückspindel so bewegt, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird,
   wobei die Werkzeugspindel über eine dritte Linearachse Y oder V verfahrbar ist, welche in einer Ebene verläuft, die senkrecht auf der ersten Linearachse X steht, wobei bevorzugt die Werkzeugspindel für die Anfasbearbeitung über die dritte Linearachse Y oder V so angeordnet wird, dass die Drehachse der Werkzeugaufnahme die Drehachse der Werkstückaufnahme nicht schneidet und bevorzugt windschief zu dieser verläuft.

11. Vorrichtung nach einem der vorangegangenen Ansprüche, wobei die Werkzeugspindel über eine zweite Schwenkachse A2 verschwenkbar ist, welche senkrecht zu ihrer Drehachse ausgerichtet ist und in einer Ebene verläuft, die senkrecht auf der ersten Linearachse X steht, wobei es sich bevorzugt bei der zweite Schwenkachse A2 um eine Stellachse oder eine NC-Achse handelt und/oder wobei die Werkzeugspindel über die zweite Schwenkachse A2 aus einer ersten Bearbeitungsposition zur Bearbeitung einer unteren Kante des Werkstücks in eine zweite Bearbeitungsposition zur Bearbeitung einer oberen Kante verschwenkbar ist, und/oder wobei die zweite Schwenkachse A2 ein Verschwenken der Drehachse der Werkzeugaufnahme in einer Ebene erlaubt, in welcher die erste Schwenkachse A verläuft.

12. Vorrichtung nach einem der vorangegangenen Ansprüche, wobei die Steuerung eine Funktion zur Eingabe eines Parameters der gewünschten Fasenform und/oder eine Funktion zur Bestimmung der Fasenform aus einem oder mehreren Parametern der Lückenkontur der Verzahnung, welche angefast werden soll, umfasst, wobei es sich bei dem einen oder den mehreren Parametern der Lückenkontur der Verzahnung um einen oder mehrere Parameter handelt, welche über eine Funktion zur Einrichtung des Verzahnungsprozesses, mit welchem die Verzahnung erzeugt wird, eingebbar sind, wobei die Fasenform bevorzugt anhand des eingegebenen Parameters der Fasenform und des einen oder der mehreren Parameter der Lückenkontur bestimmt wird.

13. Vorrichtung nach einem der vorangegangenen Ansprüche, wobei die Steuerung eine Eingabefunktion umfasst, über welche eine gewünschte Fasenform vorgebbar ist, insbesondere eine gewünschte Fasenform, bei welcher die Fasenbreite und/oder die Fasentiefe und/oder der Fasenwinkel über die Zahnlücke variiert, wobei die Steuerung weiterhin eine Berechnungsfunktion umfasst, über welche auf Grundlage der gewünschten Fasenform eine erzielbare Fasenform bestimmt wird, wobei die Steuerung bevorzugt eine Anzeigefunktion umfasst, welche die gewünschte Fasenform sowie die erzielbare Fasenform graphisch darstellt, um so einen optischen Vergleich der beiden Fasenformen zu ermöglichen, und/oder eine Anzeigefunktion zur Darstellung der Abweichung zwischen der gewünschten Fasenform sowie der erzielbaren Fasenform.

14. Verfahren zur Anfasbearbeitung einer Kante eines verzahnten Werkstücks mittels einer Vorrichtung nach einem der vorangegangenen Ansprüche, wobei bevorzugt zur Anfasbearbeitung eines in der Werkstückaufnahme aufgenommenen verzahnten Werkstücks die Werkzeugspindel über die mindestens eine Linearachse relativ zur Werkstückspindel so bewegt wird, dass ein in der Werkzeugaufnahme aufgenommener Fingerfräser gesteuert entlang der Kontur einer zu bearbeitenden Kante des Werkstücks geführt wird, während das Werkstück um seine Drehachse gedreht wird.

15. Verfahren nach Anspruch 14, wobei in einem ersten Bearbeitungsschritt eine Fase erzeugt wird, wobei die erste Fase vermessen wird und hieraus Korrekturwerte bestimmt werden, welche in einem zweiten Bearbeitungsschritt berücksichtigt werden, wobei bevorzugt der erste Bearbeitungsschritt an einem ersten Werkstück und der zweite Bearbeitungsschritt an einem zweiten Werkstück vorgenommen wird oder wobei bevorzugt der erste Bearbeitungsschritt und der zweite Bearbeitungsschritt an dem selben Werkstück vorgenommen werden, wobei die erste Fase noch nicht die gewünschte Tiefe aufweist und dann im zweiten Bearbeitungsschritt auf volle Tiefe gefräst wird.

**Claims**

1. An apparatus for a chamfer machining of a gear machined workpiece (5) comprising

   a workpiece spindle (1) having a workpiece holder (2) rotatably supported about an axis of rotation (C2) for holding the workpiece;
   a tool spindle (3) having a tool holder rotatably supported about an axis of rotation (B3) for holding a finger mill (6), wherein the tool spindle is travelable via at least one linear axis (X) of the apparatus relative to the workpiece holder; and
   a control having a machining function that rotates the workpiece held in the workpiece holder by controlling the workpiece spindle for the chamfer machining of a gear machined workpiece while a finger mill held in the tool holder engages at the edge to be machined,
   **characterized in that**
   the machining function varies the rotational speed of the workpiece (5) during the chamfer machining such that a left tooth trace (1.FL) is machined at a different rotational speed and/or rotational acceleration than a right tooth trace (2.FL) and/or is machined with a rotational speed profile of the workpiece that is not symmetrical with the rotational speed profile used on the right tooth trace

2. An apparatus in accordance with claim 1, wherein the machining function varies the rotational speed over a tooth space; wherein the machine function preferably uses the same speed profile of the rotational speed for every tooth space; wherein the machining function preferably varies the rotational speed over a tooth space such that the cutting volume of the finger mill per unit of time and/or the relative speed between the edge and the finger mill fluctuates over the tooth space by no more than 30% of the maximum value; and/or wherein the machining function varies the rotational speed of the workpiece over a tooth space such that a left tooth trace is machined at a different rotational speed and/or rotational acceleration than a right tooth trace and/or is machined with a rotational speed profile of the workpiece that is not symmetrical with the rotational speed profile used on the right tooth trace; and/or wherein the machining function varies the rotational speed over a tooth space such that work is carried out at a greater rotational acceleration of the workpiece in the region of the dedendum than at at least one tooth trace and preferably at both tooth traces.

3. An apparatus in accordance with claim 1 or claim 2, wherein the machining function changes the direction of rotation of the workpiece on traveling through a tooth space.

4. An apparatus in accordance with one of the preceding claims, wherein the machining function for the chamfer machining of a gear machined workpiece held in the workpiece holder moves the tool spindle relative to the workpiece spindle via the at least one linear axis such that a finger mill held in the tool holder is guided in a controlled manner along the contour of an edge of the workpiece to be machined while the workpiece is rotated about its axis of rotation.

5. An apparatus in accordance with one of the preceding claims, wherein the tool spindle is travelable via a first linear axis X in a direction perpendicular to the axis of rotation of the workpiece holder and/or via a second linear axis Z in parallel with the axis of rotation of the workpiece holder; wherein the machining function preferably controls the tool spindle via the first linear axis X and/or the second linear axis Z such that a finger mill held in the tool holder is guided in a controlled manner along the contour of an edge of the workpiece to be machined while the workpiece is rotated about its axis of rotation, wherein the finger mill is preferably guided in a controlled manner along the contour at least over a partial region of the tooth space by a superposition of a movement of the first linear axis X and the second linear axis Z; and/or wherein the finger mill is preferably guided in a controlled manner along the contour on the traveling through a tooth space both by a movement of the first linear axis X and of the second linear axis Z.

6. An apparatus in accordance with one of the preceding claims, wherein the tool spindle is travelable via a first linear axis X in a direction perpendicular to the axis of rotation of the workpiece holder and via a second linear axis Z in parallel with the axis of rotation of the workpiece holder, wherein the machining function controls the tool spindle via the first linear axis X and/or the second linear axis Z such that a finger mill held in the tool holder is guided in a controlled manner along the contour of an edge of the workpiece to be machined, wherein the machining function controls the tool spindle via the first linear axis X and/or the second linear axis Z such that different axial regions of the jacket surface of a finger mill held in the tool holder come into engagement with the edge of the workpiece to be machined; and/or wherein the tool holder is guided in a controlled manner along the contour of the edge to be machined at least over partial regions of a tooth space only via the second linear axis Z or only via the first linear axis X and not via the respective other linear axis.

7. An apparatus in accordance with one of the preceding claims, wherein the machining function is configured for the use of a finger mill having a cylindrical jacket surface or a conical jacket surface having a cone angle of less than 20°, preferably of less than 10°; and/or wherein the machining function works with an orientation of the tool holder by which a finger mill held in the tool holder extends, starting from the tool holder, through the tooth space to the edge of the gearing it machines.

8. An apparatus in accordance with one of the preceding claims, wherein the tool spindle is travelable via a first linear axis X in a direction perpendicular to the axis of rotation of the workpiece holder and/or via a second linear axis Z in parallel with the axis of rotation of the workpiece holder relative to the workpiece holder, wherein he machining function moves the tool spindle via the first linear axis X and/or via the second linear axis Z relative to the workpiece spindle such that a finger mill held in the tool holder is guided in a controlled manner along the contour of an edge of the workpiece to be machined while the workpiece is rotated about its axis of rotation; wherein the machining function is preferably configured for the use of a finger mill having a cylindrical jacket surface or a conical jacket surface having a cone angle of less than 20°, preferably of less than 10°; wherein the machining function controls the tool spindle via the first linear axis X and/or via the second linear axis Z such that different axial regions of the jacket surface of a finger mill held in the tool holder come into engagement with the edge of the workpiece to be machined; and/or in that the machining function works with an orientation of the tool holder by which a finger mill held in the tool holder extends, starting from the tool holder, through the tooth space to the edge of the gearing it machines.

9. An apparatus in accordance with one of the preceding claims, wherein the tool spindle is not pivoted on traveling through a tooth space; and/or wherein the tool spindle is pivotable about a first pivot axis A and/or A2; wherein the machining function preferably pivots the tool spindle via the first pivot axis A and/or A2 on traveling through a tooth space to reduce variations of the angle of the chamfer measured in a plane perpendicularly intersecting the tooth trace over the tooth space; and/or wherein the first pivot axis A preferably extends perpendicular to the axis of rotation of the workpiece holder and/or in parallel with the first linear axis X.

10. An apparatus in accordance with one of the preceding claims, wherein the tool spindle is travelable via a first linear axis X in a direction perpendicular to the axis of rotation of the workpiece holder and via a second linear axis Z in parallel with the axis of rotation of the workpiece holder relative to the workpiece holder; and

wherein the machining function moves the tool spindle via the first linear axis X and/or via the second linear axis Z relative to the workpiece spindle for chamfer machining a gear machined workpiece held in the workpiece holder such that a finger mill held in the tool holder is guided in a controlled manner along the contour of an edge of the workpiece to be machined while the workpiece is rotated about its axis of rotation; wherein the tool spindle is travelable via a third linear axis Y or V that extends in a plane that is perpendicular to the first linear axis X, with the tool spindle preferably being arranged for the chamfer machining via the third linear axis Y or V such that the axis of rotation of the tool holder does not intersect the axis of rotation of the workpiece holder and preferably extends skewed thereto.

11. An apparatus in accordance with one of the preceding claims, wherein the tool spindle is pivotable via a second pivot axis A2 that is oriented perpendicular to its axis of rotation and extends in a plane that is perpendicular to the first linear axis X, wherein the second pivot axis A2 is preferably an adjusting axis or an NC axis; and/or wherein the tool spindle is pivotable via the second pivot axis A2 from a first machining position for machining a lower edge of the workpiece into a second machining position for machining an upper edge; and/or wherein the second pivot axis A2 permits a pivoting of the axis of rotation of the tool holder in a plane in which the first pivot axis A extends.

12. A method in accordance with one of the preceding claims, wherein the control comprises a function for inputting a parameter of the desired chamfer shape and/or a function for determining the chamfer shape from one or more parameters of the space contour of the gearing that is to be chamfered; wherein the one or more parameters of the space contour of the gearing are one or more parameters that can be input via a function for dressing the gearing process by which the gearing is generated; and wherein the chamfer shape is preferably determined with reference to the input parameter of the chamfer shape and to the one or more parameters of the space contour.

13. An apparatus in accordance with one of the preceding claims, wherein the control comprises an input function via which a desired chamfer shape can be specified, in particular a desired chamfer shape in which the chamfer width and/or the chamfer depth and/or the chamfer angle varies/vary over the tooth space; wherein the control further comprises a calculation function via which an achievable chamfer shape is determined on the basis of the desired chamfer shape; and wherein the control preferably comprises a display function that graphically represents the desired chamfer shape and the achievable chamfer shape to thus enable a visual comparison of the two chamfer shapes and/or a display function to represent the deviation between the desired chamfer shape and the achievable chamfer shape.

14. A method for the chamfer machining of an edge of a gear machined workpiece by means of an apparatus in accordance with one of the preceding claims, wherein the tool spindle is preferably moved relative to the workpiece spindle via the at least one linear axis for the chamfer machining of a gear machined workpiece held in the workpiece holder such that a finger mill held in the tool holder is guided in a controlled manner along the contour of an edge of the workpiece to be machined while the workpiece is rotated about its axis of rotation.

15. A method in accordance with claim 14, wherein, in a first machining step, a chamfer is generated; wherein the first chamfer is measured and correction values are determined therefrom that are taken into account in a second machining step, with the first machining step preferably being carried out at a first workpiece and the second machining step being carried out at a second workpiece; or wherein the first machining step and the second machining step are preferably carried out at the same workpiece; and wherein the first chamfer does not yet have the desired depth and is then milled to a full depth in the second machining step.

**Revendications**

1. Dispositif d'usinage par chanfreinage d'une pièce dentée (5), comportant

   une broche porte-pièce (1) dotée d'une fixation de pièce (2) montée rotative autour d'un axe de rotation (C2) pour recevoir la pièce,
   une broche porte-outil (3) dotée d'un logement d'outil (4) monté rotatif autour d'un axe de rotation (B3) pour recevoir une fraise à queue (6), la broche porte-outil pouvant être déplacée par rapport à la fixation de pièce sur au moins un axe linéaire (X) du dispositif, et
   une commande dotée d'une fonction d'usinage qui tourne la pièce reçue dans la fixation de pièce pour l'usinage par chanfreinage d'une pièce dentée en commandant la broche porte-pièce pendant qu'une fraise à queue reçue dans le logement d'outil attaque l'arête à usiner,
   **caractérisé en ce que**
   la fonction d'usinage varie la vitesse de rotation de la pièce (5) pendant l'usinage par chanfreinage de telle manière qu'un flanc de dent gauche (1.FL) est usiné avec une autre vitesse de rotation et/ou accélération de rotation qu'un flanc de dent droit (2.FL) et/ou est usiné avec un profil de vitesse de rotation de la pièce qui n'est pas symétrique au profil de vitesse de rotation utilisé sur le flanc de dent droit.

2. Dispositif selon la revendication 1, dans lequel la fonction d'usinage varie la vitesse de rotation sur un entredent, la fonction d'usinage utilisant de préférence le même profil de vitesse de la vitesse de rotation pour chaque entredent, la fonction d'usinage variant la vitesse de rotation sur un entredent de préférence de telle manière que le volume de coupe de la fraise à queue par unité de temps et/ou la vitesse relative entre l'arête et la fraise à queue ne fluctuent pas de plus de 30 % de la valeur maximale sur l'entredent et/ou la fonction d'usinage variant la vitesse de rotation sur un entredent de telle manière que, dans la zone du pied de la dent, le travail se fait avec une accélération de rotation de la pièce plus élevée que sur au moins un et de préférence les deux flancs de dent.

3. Dispositif selon la revendication 1 ou 2, dans lequel la fonction d'usinage modifie le sens de rotation de la pièce lors de la traversée d'un entredent.

4. Dispositif selon l'une des revendications précédentes, dans lequel la fonction d'usinage pour l'usinage par chanfreinage d'une pièce dentée reçue dans la fixation de pièce déplace la broche porte-outil par rapport à la broche porte-pièce sur l'au moins un axe linéaire de telle manière qu'une fraise à queue reçue dans le logement d'outil est guidée de manière commandée le long du contour d'une arête à usiner de la pièce pendant que la pièce est tournée autour de son axe de rotation.

5. Dispositif selon l'une des revendications précédentes, dans lequel la broche porte-outil peut être déplacée sur un premier axe linéaire X dans une direction perpendiculaire à l'axe de rotation de la fixation de pièce et/ou sur un deuxième axe linéaire Z parallèle à l'axe de rotation de la fixation de pièce, la fonction d'usinage commandant de préférence la broche porte-outil sur le premier axe linéaire X et/ou le deuxième axe linéaire Z de telle manière qu'une fraise à queue reçue dans le logement d'outil est guidée de manière commandée le long du contour d'une arête à usiner de la pièce pendant que la pièce est tournée autour de son axe de rotation, la fraise à queue étant de préférence guidée, au moins sur une partie de l'entredent, de manière commandée le long du contour par un forçage d'un mouvement du premier axe linéaire X et du deuxième axe linéaire Z et/ou la fraise à queue étant de préférence guidée, lors de la traversée d'un entredent, de manière commandée le long du contour aussi bien par un mouvement du premier axe linéaire X que du deuxième axe linéaire Z.

6. Dispositif selon l'une des revendications précédentes, dans lequel la broche porte-outil peut être déplacée sur un premier axe linéaire X dans une direction perpendiculaire à l'axe de rotation de la fixation de pièce et sur un deuxième axe linéaire Z parallèle à l'axe de rotation de la fixation de pièce, la fonction d'usinage commandant la broche porte-outil sur le premier axe linéaire X et/ou le deuxième axe linéaire Z de telle manière qu'une fraise à queue reçue dans le logement d'outil est guidée de manière commandée le long du contour d'une arête à usiner de la pièce, la fonction d'usinage commandant la broche porte-outil sur le premier axe linéaire X et/ou le deuxième axe linéaire Z de telle manière que différentes zones axiales de la surface latérale d'une fraise à queue reçue dans le logement d'outil viennent en prise avec l'arête à usiner de la pièce et/ou le logement d'outil étant guidé, au moins sur certaines zones d'un entredent, de manière commandée le long du contour de l'arête à usiner, uniquement sur le deuxième axe linéaire Z ou uniquement sur le premier axe linéaire X et pas sur l'autre axe linéaire respectif.

7. Dispositif selon l'une des revendications précédentes, dans lequel la fonction d'usinage est conçue pour l'utilisation d'une fraise à queue dotée d'une surface latérale cylindrique ou d'une surface latérale conique avec un angle de cône inférieur à 20°, de préférence inférieur à 10°, et/ou dans lequel la fonction d'usinage travaille avec une orientation du logement d'outil avec laquelle une fraise à queue reçue dans le logement d'outil s'étend à partir du logement d'outil à travers l'entredent jusqu'à l'arête de la denture qu'elle usine.

8. Dispositif selon l'une des revendications précédentes, dans lequel la broche porte-outil peut être déplacée par rapport à la fixation de pièce sur un premier axe linéaire X dans une direction perpendiculaire à l'axe de rotation de la fixation de pièce et/ou sur un deuxième axe linéaire Z parallèle à l'axe de rotation de la fixation de pièce, la fonction d'usinage déplaçant, pour l'usinage par chanfreinage d'une pièce dentée reçue dans la fixation de pièce, la broche porte-outil par rapport à la broche porte-pièce sur le premier axe linéaire X et/ou le deuxième axe linéaire Z de telle manière qu'une fraise à queue reçue dans le logement d'outil est guidée de manière commandée le long du contour d'une arête à usiner de la pièce pendant que la pièce est tournée autour de son axe de rotation, la fonction d'usinage étant de préférence conçue pour l'utilisation d'une fraise à queue dotée d'une surface latérale cylindrique ou d'une surface latérale conique avec un angle de cône inférieur à 20°, de préférence inférieur à 10°, dans lequel la fonction d'usinage commande la broche porte-outil sur le premier axe linéaire X et/ou le deuxième axe linéaire Z de telle manière que différentes zones axiales de la surface latérale d'une fraise à queue reçue dans le logement d'outil viennent en prise avec l'arête à usiner de la pièce, et/ou que la fonction d'usinage travaille avec une orientation du logement d'outil avec laquelle une fraise à queue reçue dans le logement d'outil s'étend à partir du logement d'outil à travers l'entredent jusqu'à l'arête de la denture qu'elle usine.

9. Dispositif selon l'une des revendications précédentes, dans lequel la broche porte-outil n'est pas pivotée lors de la traversée d'un entredent, et/ou dans lequel la broche porte-outil peut être pivotée autour d'un premier axe de pivotement A et/ou A2, la fonction d'usinage pivotant de préférence la broche porte-outil sur le premier axe de pivotement A et/ou A2 lors de la traversée d'un entredent pour diminuer des variations d'un angle du chanfrein, mesuré dans un plan coupant perpendiculairement le flanc de dent, sur l'entredent, et/ou dans lequel le premier axe de pivotement A s'étend de préférence perpendiculairement à l'axe de rotation de la fixation de pièce et/ou parallèlement au premier axe linéaire X.

10. Dispositif selon l'une des revendications précédentes, dans lequel la broche porte-outil peut être déplacée par rapport à la fixation de pièce sur un premier axe linéaire X dans une direction perpendiculaire à l'axe de rotation de la fixation de pièce et sur un deuxième axe linéaire Z parallèlement à l'axe de rotation de la fixation de pièce, et

dans lequel la fonction d'usinage déplace, pour l'usinage par chanfreinage d'une pièce dentée reçue dans la fixation de pièce, la broche porte-outil par rapport à la broche porte-pièce sur le premier axe linéaire X et/ou le deuxième axe linéaire Z de telle manière qu'une fraise à queue reçue dans le logement d'outil est guidée de manière commandée le long du contour d'une arête à usiner de la pièce pendant que la pièce est tournée autour de son axe de rotation,
dans lequel la broche porte-outil peut être déplacée sur un troisième axe linéaire Y ou V qui s'étend dans un plan qui est perpendiculaire au premier axe linéaire X, la broche porte-outil étant de préférence agencée pour l'usinage par chanfreinage sur le troisième axe linéaire Y ou V de telle manière que l'axe de rotation du logement d'outil ne coupe pas l'axe de rotation de la fixation de pièce et s'étend de préférence de manière inclinée par rapport à celui-ci.

11. Dispositif selon l'une des revendications précédentes, dans lequel la broche porte-outil peut être pivotée sur un deuxième axe de pivotement A2 qui est orienté perpendiculairement à son axe de rotation et s'étend dans un plan qui est perpendiculaire au premier axe linéaire X, le deuxième axe de pivotement A2 étant de préférence un axe de positionnement ou un axe CN et/ou dans lequel la broche porte-outil peut être pivotée, sur le deuxième axe de pivotement A2, d'une première position d'usinage pour l'usinage d'une arête inférieure de la pièce à une deuxième position d'usinage pour l'usinage d'une arête supérieure, et/ou dans lequel le deuxième axe de pivotement A2 permet un pivotement de l'axe de rotation du logement d'outil dans un plan dans lequel s'étend le premier axe de pivotement A.

12. Dispositif selon l'une des revendications précédentes, dans lequel la commande comprend une fonction pour la saisie d'un paramètre de la forme de chanfrein souhaitée et/ou une fonction pour la détermination de la forme de chanfrein à partir d'un ou de plusieurs paramètres du contour de l'entredent de la denture qui doit être chanfreinée, le ou les plusieurs paramètres du contour de l'entredent de la denture étant un ou plusieurs paramètres qui peuvent être saisis par le biais d'une fonction pour le réglage du processus de taille des engrenages avec lequel la denture est générée, la forme de chanfrein étant de préférence déterminée à l'aide du paramètre saisi de la forme de chanfrein et du ou des plusieurs paramètres du contour de l'entredent.

13. Dispositif selon l'une des revendications précédentes, dans lequel la commande comprend une fonction de saisie par le biais de laquelle une forme de chanfrein souhaitée peut être prédéfinie, en particulier une forme de chanfrein souhaitée pour laquelle la largeur de chanfrein et/ou la profondeur de chanfrein et/ou l'angle de chanfrein varient sur l'entredent, la commande comprenant en outre une fonction de calcul par le biais de laquelle une forme de chanfrein réalisable est déterminée sur la base de la forme de chanfrein souhaitée, la commande comprenant de préférence une fonction d'affichage qui représente graphiquement la forme de chanfrein souhaitée ainsi que la forme de chanfrein réalisable pour permettre ainsi une comparaison optique des deux formes de chanfrein, et/ou une fonction d'affichage pour la représentation de la divergence entre la forme de chanfrein souhaitée et la forme de chanfrein réalisable.

14. Procédé d'usinage par chanfreinage d'une arête d'une pièce dentée au moyen d'un dispositif selon l'une des revendications précédentes, dans lequel, pour l'usinage par chanfreinage d'une pièce dentée reçue dans la fixation de pièce, la broche porte-outil est de préférence déplacée par rapport à la broche porte-pièce sur l'au moins un axe linéaire de telle manière qu'une fraise à queue reçue dans le logement d'outil est guidée de manière commandée le long du contour d'une arête à usiner de la pièce pendant que la pièce est tournée autour de son axe de rotation.

15. Procédé selon la revendication 14, dans lequel, dans une première étape d'usinage, un chanfrein est généré, le premier chanfrein étant mesuré et des valeurs de correction, lesquelles sont prises en compte dans une deuxième étape d'usinage, étant déterminées à partir de cette mesure, la première étape d'usinage étant de préférence effectuée sur une première pièce et la deuxième étape d'usinage sur une deuxième pièce ou la première étape d'usinage et la deuxième étape d'usinage étant de préférence effectuées sur la même pièce, le premier chanfrein ne présentant pas encore la profondeur souhaitée et étant ensuite chanfreiné sur toute sa profondeur dans la deuxième étape d'usinage.

# Fig. 1a

# Fig. 1b

# Fig. 2

Fig. 3

Fig. 4

Fig. 4a

Fig. 5

Fig. 6

Fig. 6a

Fig. 7

Fig. 8

Fig. 9

# Fig. 10

# *Fig.* 11

# Fig. 12

# Fig. 13

# Fig. 14

# Fig. 15

# Fig. 16

## Fig. 17

## Fig. 18

# Fig. 19

# Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202012008601 U1
- DE 102009020771 A1
- EP 3012056 A1
- DE 102013003804 A1
- DE 102011050498 A1
- DE 4134925 C1